# EUROPEAN PATENT SPECIFICATION

(11) **EP 4 304 046 B1**
(45) Date of publication and mention of the grant of the patent: **29.10.2025**
(21) Application number: 22762601.7
(22) Date of filing: 03.03.2022
(51) Int. Cl.: H02J 7/04

(54) **DATA TRANSMISSION SYSTEM, POWER SUPPLY APPARATUS, AND EXTERNAL DEVICE**
DATENÜBERTRAGUNGSSYSTEM, STROMVERSORGUNGSVORRICHTUNG UND EXTERNE VORRICHTUNG
SYSTÈME DE TRANSMISSION DE DONNÉES, APPAREIL D'ALIMENTATION ÉLECTRIQUE ET DISPOSITIF EXTERNE

(30) Priority: 03.03.2021 CN 202110234922
(43) Date of publication of application: 10.01.2024
(73) Proprietor: Positec Power Tools (Suzhou) Co., Ltd., Suzhou, Jiangsu 215123 (CN)
(72) Inventor: ZHANG, Qing, Suzhou, Jiangsu 215123 (CN); DENG, Qiang, Suzhou, Jiangsu 215123 (CN)
(74) Representative: Korenberg, Alexander Tal
(86) International application number: PCT/CN2022/079076
(87) International publication number: WO 2022/184139

(56) References cited:
- EP-A1- 3 709 432
- WO-A1-2018/224375
- WO-A1-2018/224375
- CN-A- 110 581 575
- CN-U- 206 019 730
- CN-U- 207 398 896
- US-A1- 2011 094 762
- US-A1- 2011 094 762

## Description

### BACKGROUND

### Technical Field

The present disclosure relates to the technical field of electric tools, and in particular to a data transmission system, a power supply apparatus and an external device.

### Related Art

With the development of communication technology, two-terminal communication and multi-terminal communication technologies are widely used in various industries. Taking two-terminal communication as an example, in the electric tool industry, when data transmission is carried out between a battery pack and an external device, the transmitted data may be interfered with by external interference signals (such as electromagnetic interference signals), ultimately leading to data transmission failure.

US 2011/094762 A1 discloses an electric power tool which has a drive motor and an electronic control unit. Power is supplied by a battery pack with several individual cells and a monitoring circuit for the operating parameters of the cells.

### SUMMARY

Based on this, it is necessary to provide a data transmission system, a power supply apparatus and an external device to solve the problem of data transmission failure caused by external interference signals when data transmission is carried out between the battery pack and the external device.

The invention of the present application are set out in the claims.

Described herein is a data transmission system, including a battery pack and an external device. The battery pack has a first processing module, a first transceiving module, a first electrode terminal and a first communication terminal, and the external device has a second processing module, a second transceiving module, a second electrode terminal and a second communication terminal. The first processing module is electrically connected to the first transceiving module. The second processing module is electrically connected to the second transceiving module. When the battery pack and the external device are matched and connected, the first electrode terminal and the second electrode terminal are connected correspondingly, the first communication terminal and the second communication terminal are connected correspondingly, and the first transceiving module is connected to the second transceiving module by using the first communication terminal and the second communication terminal, so as to carry out data transmission between the first transceiving module and the second transceiving module.

The first transceiving module receives data from the first processing module or sends data to the first processing module at a first transmission voltage, and the second transceiving module receives data from the second processing module or sends data to the second processing module at a second transmission voltage.

A boost unit is arranged between the first transceiving module and the second transceiving module. When the first transceiving module sends data to the second transceiving module or the second transceiving module sends data to the first transceiving module, the boost unit adjusts a transmission voltage of the data to a preset voltage. The preset voltage is greater than the first transmission voltage and the second transmission voltage.

**In** one example, the first transceiving module includes a first sending unit and a first receiving unit, and the second transceiving module includes a second sending unit and a second receiving unit.

When the battery pack and the external device are matched and connected, the first processing module transmits data to the first sending unit at the first transmission voltage, the boost unit adjusts the transmission voltage of the data from the first transmission voltage to the preset voltage and sends the data to the second receiving unit at the preset voltage, and the second receiving unit adjusts the transmission voltage of the data from the preset voltage to the second transmission voltage and transmits the data to the second processing module at the second transmission voltage; or

the second processing module transmits data to the second sending unit at the second transmission voltage, the boost unit adjusts the transmission voltage of the data from the second transmission voltage to the preset voltage and sends the data to the first receiving unit at the preset voltage, and the first receiving unit adjusts the transmission voltage of the data from the preset voltage to the first transmission voltage and transmits the data to the first processing module at the first transmission voltage.

In one example, the first transmission voltage is within a withstand voltage range of the first processing module. The second transmission voltage is within a withstand voltage range of the second processing module.

In one example, the boost unit is arranged in the battery pack and connected between the first transceiving module and the first communication terminal; or the boost unit is arranged in the external device and connected between the second transceiving module and the second communication terminal.

In one example, a data transmission line is arranged between the first transceiving module and the first communication terminal, or a data transmission line is arranged between the second transceiving module and the second communication terminal, or a data transmission line is arranged between the first communication terminal and the second communication terminal.

The boost unit is arranged on the data transmission line.

In one example, the external device includes a charger or an electric tool.

In one example, the first sending unit includes a first switching subunit and a second switching subunit. A control end of the first switching subunit is connected to the first processing module and configured to receive data from the first processing module. The first switching subunit is arranged between a control end of the second switching subunit and a ground end. The second switching subunit is arranged between the boost unit and the ground end. The control end of the second switching subunit is further connected to a power end of the first transmission voltage.

When the control end of the first switching subunit receives a first type of data, the first switching subunit disconnects the control end of the second switching subunit from the ground end, the control end of the second switching subunit is connected to the power end of the first transmission voltage, and the second switching subunit connects the boost unit to the ground end. When the control end of the first switching subunit receives a second type of data, the first switching subunit connects the control end of the second switching subunit to the ground end, and the second switching subunit disconnects the boost unit from the ground end.

In one example, the second receiving unit includes a third switching subunit. A control end of the third switching subunit is connected to a power end of the second transmission voltage. The third switching subunit is arranged between the boost unit and an output end of the second receiving unit. The output end of the second receiving unit is further connected to the power end of the second transmission voltage.

When the second communication terminal receives the first type of data, the third switching subunit connects the boost unit to the output end of the second receiving unit. When the second communication terminal receives the second type of data, the third switching subunit disconnects the boost unit from the output end of the second receiving unit, and the output end of the second receiving unit is connected to the power end of the second transmission voltage.

In one example, the boost unit includes a power end of the preset voltage. The power end of the preset voltage is connected to the first transceiving module and the second transceiving module by using a first pull-up resistor.

Described herein is a data transmission method based on a data transmission system. The data transmission system includes a battery pack and an external device. The battery pack has a first processing module, a first transceiving module, a first electrode terminal and a first communication terminal, and the external device has a second processing module, a second transceiving module, a second electrode terminal and a second communication terminal. The first processing module is electrically connected to the first transceiving module. The second processing module is electrically connected to the second transceiving module. When the battery pack and the external device are matched and connected, the first electrode terminal and the second electrode terminal are connected correspondingly, the first communication terminal and the second communication terminal are connected correspondingly, and the first transceiving module is connected to the second transceiving module by using the first communication terminal and the second communication terminal. A boost unit is arranged between the first transceiving module and the second transceiving module.

The data transmission method includes:
the first transceiving module receives data from the first processing module at a first transmission voltage;
the boost unit adjusts a transmission voltage of the data to a preset voltage and sends the data to the second transceiving module at the preset voltage, the preset voltage being greater than the first transmission voltage; and
when receiving the data, the second transceiving module adjusts the transmission voltage of the data from the preset voltage to a second transmission voltage and transmits the data to the second processing module at the second transmission voltage, the second transmission voltage being less than the preset voltage;
   or
the second transceiving module receives data from the second processing module at a second transmission voltage;
the boost unit adjusts a transmission voltage of the data to a preset voltage and sends the data to the first transceiving module at the preset voltage, the preset voltage being greater than the second transmission voltage; and
when receiving the data, the first transceiving module adjusts the transmission voltage of the data from the preset voltage to a first transmission voltage and transmits the data to the first processing module at the first transmission voltage, the first transmission voltage being less than the preset voltage.

Described herein is a data transmission system, including a battery pack and an external device. The battery pack has a first processing module, a first level shifter module, a first electrode terminal and a first communication terminal, and the external device has a second processing module, a second level shifter module, a second electrode terminal and a second communication terminal. The first processing module is electrically connected to the first level shifter module. The second processing module is electrically connected to the second level shifter module. When the battery pack and the external device are matched and connected, the first electrode terminal and the second electrode terminal are connected correspondingly, the first communication terminal and the second communication terminal are connected correspondingly, and the first level shifter module is connected to the second level shifter module by using the first communication terminal and the second communication terminal, so as to carry out data transmission between the first processing module and the second processing module.

The first level shifter module receives data from the first processing module or sends data to the first processing module at a first transmission voltage, and the second level shifter module receives data from the second processing module or sends data to the second processing module at a second transmission voltage.

A preset voltage source is arranged between the first level shifter module and the second level shifter module, and the preset voltage source is configured to provide a preset voltage. When the first level shifter module sends data to the second level shifter module, the first level shifter module is configured to switch the first transmission voltage to the preset voltage, and the second level shifter module is configured to switch the preset voltage to the second transmission voltage, or when the second level shifter module sends data to the first level shifter module, the second level shifter module is configured to switch the second transmission voltage to the preset voltage, and the first level shifter module is configured to switch the preset voltage to the first transmission voltage. The preset voltage is greater than the first transmission voltage and the second transmission voltage.

The first level shifter module includes a first boost unit and a first buck unit, and the second level shifter module includes a second boost unit and a second buck unit.

The first processing module transmits data to the first boost unit at the first transmission voltage, the first boost unit adjusts a transmission voltage of the data from the first transmission voltage to the preset voltage and sends the data to the second buck unit at the preset voltage, and the second buck unit adjusts the transmission voltage of the data from the preset voltage to the second transmission voltage and transmits the data to the second processing module at the second transmission voltage; and/or
the second processing module transmits data to the second boost unit at the second transmission voltage, the second boost unit adjusts a transmission voltage of the data from the second transmission voltage to the preset voltage and sends the data to the first buck unit at the preset voltage, and the first buck unit adjusts the transmission voltage of the data from the preset voltage to the first transmission voltage and transmits the data to the first processing module at the first transmission voltage.

In one example, the first transmission voltage is less than or equal to a withstand voltage of the first processing module. The second transmission voltage is less than or equal to a withstand voltage of the second processing module.

In one example, the preset voltage source is arranged in the battery pack and connected between the first level shifter module and the first communication terminal; or the preset voltage source is arranged in the external device and connected between the second level shifter module and the second communication terminal.

In one example, a data transmission line is arranged between the first level shifter module and the first communication terminal, or a data transmission line is arranged between the second level shifter module and the second communication terminal, or a data transmission line is arranged between the first communication terminal and the second communication terminal; and the preset voltage source is arranged on the data transmission line.

In one example, the external device includes a charger or an electric tool.

The first boost unit includes a first switching subunit. The first switching subunit is arranged between the first processing module and the preset voltage source, and configured to receive the data sent by the first processing module and be turned on or off according to a type of data. When the first boost unit receives a first type of data, the first switching subunit is turned on such that the preset voltage source is connected to a low potential. When the first boost unit receives a second type of data, the first switching subunit is turned off such that the preset voltage source outputs the preset voltage to the second buck unit.

In one example, the first boost unit further includes a second switching subunit. The second switching subunit is arranged between the first processing module and the first switching subunit, and the second switching subunit is configured to receive the data sent by the first processing module and be turned on or off according to the type of data. When the first boost unit receives the first type of data, the second switching subunit is turned off, and the first switching subunit is turned on such that the preset voltage source is connected to the low potential. When the first boost unit receives the second type of data, the second switching subunit is turned on, and the first switching subunit is turned off such that the preset voltage source outputs the preset voltage to the second buck unit.

In one example, the second buck unit includes a third switching subunit. The third switching subunit is arranged between the preset voltage source and an output end of the second buck unit, and the output end of the second buck unit is further connected to a power end of the second transmission voltage. When the second buck unit receives the first type of data, the third switching subunit is turned on such that the output end of the second buck unit is connected to the low potential. When the second buck unit receives the second type of data, the third switching subunit is turned off such that the power end of the second transmission voltage outputs the second transmission voltage to the output end of the second buck unit.

In one example, the second boost unit includes a fourth switching subunit. The fourth switching subunit is arranged between the second processing module and the preset voltage source, and the fourth switching subunit is configured to receive the data sent by the second processing module and be turned on or off according to a type of data. When the second boost unit receives a first type of data, the fourth switching subunit is turned on such that the preset voltage source is connected to a low potential. When the second boost unit receives a second type of data, the fourth switching subunit is turned off such that the preset voltage source outputs the preset voltage to the first buck unit.

In one example, the second boost unit further includes a fifth switching subunit. The fifth switching subunit is arranged between the second processing module and the fourth switching subunit, and the fifth switching subunit is configured to receive the data sent by the second processing module and be turned on or off according to the type of data. When the second boost unit receives the first type of data, the fifth switching subunit is turned off, and the fourth switching subunit is turned on such that the preset voltage source is connected to the low potential. When the second boost unit receives the second type of data, the fifth switching subunit is turned on, and the fourth switching subunit is turned off such that the preset voltage source outputs the preset voltage to the first buck unit.

In one example, the first buck unit includes a sixth switching subunit. The sixth switching subunit is arranged between the preset voltage source and an output end of the first buck unit, and the output end of the first buck unit is connected to a power end of the first transmission voltage. When the first buck unit receives the first type of data, the sixth switching subunit is turned on such that the output end of the first buck unit is connected to the low potential. When the first buck unit receives the second type of data, the sixth switching subunit is turned off such that the power end of the first transmission voltage outputs the first transmission voltage to the output end of the first buck unit.

In one example, the boost unit includes a power end of the preset voltage. The power end of the preset voltage is connected to the first level shifter module and the second level shifter module by using a first pull-up resistor.

Described herein is a power supply apparatus, capable of data transmission with an external device through a cable. The power supply apparatus includes a battery pack and a preset voltage source. The battery pack includes a first processing module, a first level shifter module, a first electrode terminal and a first communication terminal. The first processing module is electrically connected to the first level shifter module. When the battery pack and the external device are matched and connected, the first electrode terminal and a second electrode terminal of the external device are connected correspondingly, the first communication terminal and a second communication terminal of the external device are connected correspondingly, and the first level shifter module is connected to a second level shifter module of the external device by using the first communication terminal and a second communication terminal, so as to carry out data transmission between the first level shifter module and the second level shifter module.

The first level shifter module receives data from the first processing module or sends data to the first processing module at a first transmission voltage.

The preset voltage source is arranged between the first level shifter module and the second level shifter module, and the preset voltage source is configured to provide a preset voltage.

When the first level shifter module sends data to the second level shifter module, the first level shifter module is configured to switch the first transmission voltage to the preset voltage.

When the first level shifter module receives data sent by the second level shifter module, the first level shifter module is configured to switch the preset voltage to the first transmission voltage. The preset voltage is greater than the first transmission voltage.

Described herein is an external device, capable of data transmission with a battery pack through a cable. The external device includes a second processing module, a second level shifter module, a second electrode terminal and a second communication terminal. The second processing module is electrically connected to the second level shifter module. When the external device and the battery pack are matched and connected, the second electrode terminal and a first electrode terminal of the battery pack are connected correspondingly, the second communication terminal and a first communication terminal of the battery pack are connected correspondingly, and the second level shifter module is connected to a first level shifter module of the battery pack by using the second communication terminal and the first communication terminal so as to carry out data transmission between the second level shifter module and the first level shifter module.

The second level shifter module receives data from the second processing module or sends data to the second processing module at a second transmission voltage.

The external device further includes a preset voltage source. The preset voltage source is arranged between the second level shifter module and the first level shifter module, and the preset voltage source is configured to provide a preset voltage.

When the second level shifter module sends data to the first level shifter module, the second level shifter module is configured to switch the second transmission voltage to the preset voltage.

When the second level shifter module receives data sent by the first level shifter module, the second level shifter module is configured to switch the preset voltage to the second transmission voltage. The preset voltage is greater than the second transmission voltage.

The above data transmission system includes the battery pack and the external device. When the battery pack and the external device are matched and connected, the first electrode terminal and the second electrode terminal are connected correspondingly, such that the battery pack charges the external device or the external device charges the battery pack. Moreover, the first communication terminal and the second communication terminal are connected correspondingly, and the first level shifter module is connected to the second level shifter module by using the first communication terminal and the second communication terminal so as to carry out data transmission between the first level shifter module and the second level shifter module. The data transmission voltage between the first level shifter module and the first processing module is the first transmission voltage, and the data transmission voltage between the second level shifter module and the second processing module is the second transmission voltage. When the first level shifter module transmits data to the second level shifter module, the first level shifter module is configured to switch the first transmission voltage to the preset voltage, and the second level shifter module is configured to switch the preset voltage to the second transmission voltage; or when the second level shifter module transmits data to the first level shifter module, the second level shifter module is configured to switch the second transmission voltage to the preset voltage, and the first level shifter module is configured to switch the preset voltage to the first transmission voltage. The preset voltage is greater than the first transmission voltage and the second transmission voltage. The voltage source capable of providing the preset voltage is arranged between the first level shifter module and the second level shifter module, so the data transmission voltage between the first level shifter module and the second level shifter module may be boosted to a larger preset voltage, which can avoid data transmission failure caused by interference with the transmitted data due to external interference.

### BRIEF DESCRIPTION OF THE DRAWINGS

FIG. 1 is a schematic view of a connection terminal in a data transmission system according to Example I of this application;
FIG. 2 is a schematic view showing connection of the connection terminal in the data transmission system according to Example I of this application;
FIG. 3 is a schematic view of an external device being a charger in the data transmission system according to Example I of this application;
FIG. 4 is a schematic view of an external device being an electric tool in the data transmission system according to Example I of this application;
FIG. 5a is a schematic structural diagram of an implementation of a data transmission system according to Example I of this application;
FIG. 5b is a schematic structural diagram of an implementation of the data transmission system corresponding to FIG. 5a according to Example I of this application;
FIG. 6a is a schematic structural diagram of another implementation of the data transmission system according to Example I of this application;
FIG. 6b is a schematic structural diagram of another implementation of the data transmission system corresponding to FIG. 6a according to Example I of this application;
FIG. 7a is a schematic structural diagram of still another implementation of the data transmission system according to Example I of this application;
FIG. 7b is a schematic structural diagram of still another implementation of the data transmission system corresponding to FIG. 7a according to Example I of this application;
FIG. 8a is a schematic structural diagram of yet another implementation of the data transmission system according to Example I of this application;
FIG. 8b is a schematic structural diagram of yet another implementation of the data transmission system corresponding to FIG. 8a according to Example I of this application;
FIG. 9a is a schematic structural diagram of yet another implementation of the data transmission system according to Example I of this application;
FIG. 9b is a schematic structural diagram of yet another implementation of the data transmission system corresponding to FIG. 9a according to Example I of this application;
FIG. 10a is a schematic structural diagram of yet another implementation of the data transmission system according to Example I of this application;
FIG. 10b is a schematic structural diagram of yet another implementation of the data transmission system corresponding to FIG. 10a according to Example I of this application;
FIG. 11 is a schematic structural diagram of a first sending unit (first boost unit) and a second receiving unit (first buck unit) in the data transmission system according to Example I of this application;
FIG. 12 is a schematic structural diagram of yet another implementation of the data transmission system according to Example I of this application;
FIG. 13a is a schematic structural diagram of a specific example of the data transmission system according to Example I of this application;
FIG. 13b is a schematic structural diagram of a specific example of the data transmission system corresponding to FIG. 13a according to Example I of this application;
FIG. 14a is a schematic flowchart of an implementation of a data transmission method according to Example II of this application;
FIG. 14b is a schematic flowchart of an implementation of the data transmission method corresponding to FIG. 14a according to Example II of this application;
FIG. 15a is a schematic flowchart of another implementation of the data transmission method according to Example II of this application; and
FIG. 15b is a schematic flowchart of another implementation of the data transmission method corresponding to FIG. 15a according to Example II of this application.

Descriptions of reference numerals:
100, battery pack; 110, first electrode terminal; 120, first communication terminal; 10, first transceiving module (first level shifter module); 130, first sending unit (first boost unit); 131, first switching subunit; 132, second switching subunit; 140, first processing module; 150, first receiving unit (first buck unit); 151, sixth switching subunit;
200, external device; 210, second electrode terminal; 220, second communication terminal; 20, second transceiving module (second level shifter module); 230, second receiving unit (second buck unit); 231, third switching subunit; 240, second processing module; 250, second sending unit (second boost unit); 251, fourth switching subunit; 252, fifth switching subunit;
300, data transmission line;
400, boost unit (preset voltage source).

### DETAILED DESCRIPTION

In order to facilitate the understanding of the present disclosure, the present disclosure will be described more comprehensively with reference to the relevant accompanying drawings. Preferred implementations of the present disclosure are shown in the accompanying drawings. However, the present disclosure can be implemented in many different forms and is not limited to the implementations described herein. Rather, these implementations are provided to make the disclosure of this application understood more thoroughly and comprehensively.

In the present disclosure, unless otherwise explicitly specified and defined, the terms "mounting", "linking", "connection", "fixing" and the like shall be understood broadly, and may be, for example, a fixed connection, a detachable connection or integration; may be a mechanical connection or an electrical connection; or may be a direct connection, an indirect connection through an intermediate medium, or an internal communication between two elements or interaction between two elements, unless otherwise specified. For those of ordinary skill in the art, the specific meaning of the above terms in the present disclosure can be understood according to specific situations.

The terms "first" and "second" are only used for descriptive purposes, and cannot be understood as indicating or implying relative importance or implicitly indicating the number of indicated technical features. Thus, the features defined with "first" and "second" may explicitly or implicitly include at least one of the features. **In** the description of the present disclosure, "a plurality of" means at least two, for example, two or three, unless otherwise specifically defined.

Unless otherwise defined, all technical and scientific terms used herein have the same meaning as commonly understood by those skilled in the art of the present disclosure. The terms used in the specification of the present disclosure are only for the purpose of describing specific examples and are not intended to limit the present disclosure. The term "and/or" used herein includes any and all combinations of one or more related items listed.

In the traditional solution, gasoline or AC power supply is used to supply energy to various tools, so that the tools can achieve greater power to meet the needs of users. However, the gasoline is not environmentally friendly and the AC power supply is not portable. In order to meet the needs of environmental friendliness and portability, DC electric tools came into being and are now widely used. In order to make the DC electric tools achieve high power of traditional gasoline or AC power supply, at present, a plurality of lithium battery elements are combined to form a lithium battery pack, and the power is supplied to the electric tool by using the lithium battery pack, thereby meeting the working need of high power.

When the lithium battery pack is connected to the electric tool or the charger, the lithium battery pack may supply power to the electric tool, and the charger may charge the lithium battery pack. Moreover, data transmission may be carried out between the lithium battery pack and the electric tool or the charger. However, due to the existence of external interference signals such as electromagnetic signals, the data transmission process is often interfered, which leads to the data transmission failure and affects the normal communication between the lithium battery pack and the electric tool or the charger.

In view of the above problems, this application provides a data transmission system and a data transmission method.

### Example I

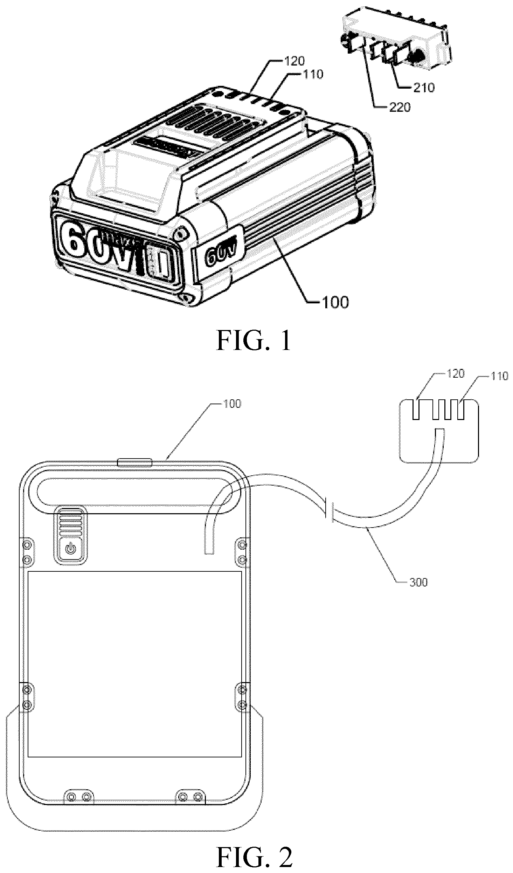

This example provides a data transmission system, including a battery pack 100 and an external device 200. With reference to FIG. 1 and FIG. 2, the battery pack 100 has a first electrode terminal 110 and a first communication terminal 120, and the external device 200 has a second electrode terminal 210 and a second communication terminal 220. When the battery pack 100 and the external device 200 are matched and connected, the first electrode terminal 110 and the second electrode terminal 210 are connected correspondingly, and the first communication terminal 120 and the second communication terminal 220 are connected correspondingly.

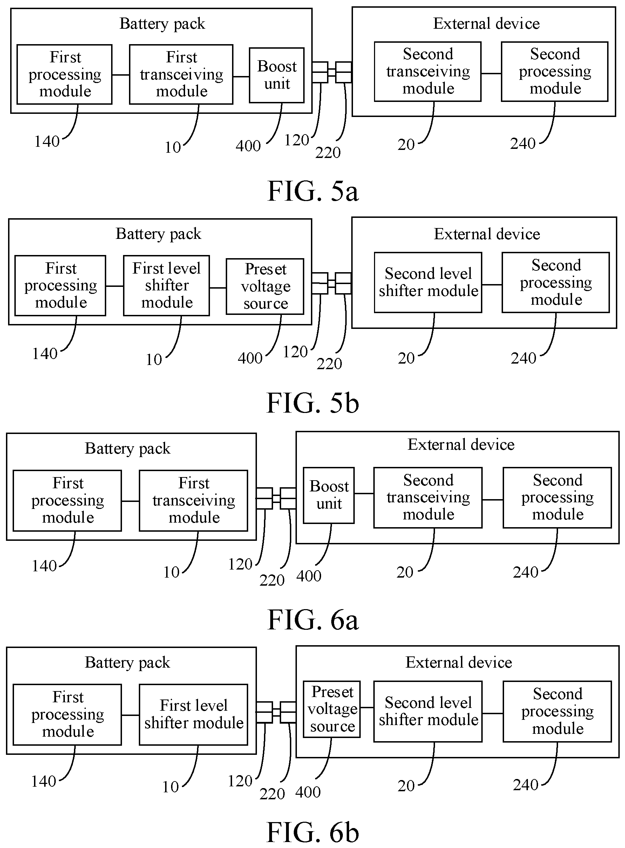

With reference to FIG. 5a and FIG. 6a, the battery pack 100 further includes a first processing module 140 and a first transceiving module 10. The first processing module 140 is electrically connected to the first transceiving module 10, and the first transceiving module 10 receives data from the first processing module 140 or sends data to the first processing module 140 at a first transmission voltage. The external device 200 further includes a second processing module 240 and a second transceiving module 20. The second processing module 240 is electrically connected to the second transceiving module 20, and the second transceiving module 20 receives data from the second processing module 240 or sends data to the second processing module 240 at a second transmission voltage.

When the battery pack 100 and the external device 200 are matched and connected, the first transceiving module 10 is connected to the second transceiving module 20 by using the first communication terminal 120 and the second communication terminal 220 so as to carry out data transmission between the first transceiving module 10 and the second transceiving module 20.

A boost unit 400 is arranged between the first transceiving module 10 and the second transceiving module 20. When the first transceiving module 10 sends data to the second transceiving module 20 or the second transceiving module 20 sends data to the first transceiving module 10, the boost unit 400 adjusts a transmission voltage of the data to a preset voltage. The preset voltage is greater than the first transmission voltage and the second transmission voltage.

Specifically, a process of the first transceiving module 10 transmitting data to the second transceiving module 20 includes: first, the first transceiving module 10 receives the data from the first processing module 140 at the first transmission voltage; next, the boost unit 400 adjusts a data transmission voltage to the preset voltage greater than the first transmission voltage and sends the data to the second transceiving module 20 at the preset voltage; and the second transceiving module 20 receives the data, adjusts the data transmission voltage from the preset voltage to the second transmission voltage, and sends the data to the second processing module 24 at the second transmission voltage, so that the second processing module 240 can analyze the received data.

A process of the second transceiving module 20 transmitting data to the first transceiving module 10 includes: first, the second transceiving module 20 receives the data from the second processing module 240 at the second transmission voltage; next, the boost unit 400 adjusts a data transmission voltage to the preset voltage greater than the second transmission voltage and sends the data to the first transceiving module 10 at the preset voltage; and the first transceiving module 10 receives the data, adjusts the data transmission voltage from the preset voltage to the first transmission voltage, and sends the data to the first processing module 140 at the first transmission voltage, so that the first processing module 140 can analyze the received data.

In actual applications, the above method can realize one-way data transmission from the battery pack 100 to the external device 200, one-way data transmission from the external device 200 to the battery pack 100 and two-way data transmission between the battery pack 100 and the external device 200, and can avoid data transmission failure caused by external signal interference in the transmission process of various types of data.

The above data transmission system includes the battery pack 100 and the external device 200. When the battery pack 100 and the external device 200 are matched and connected, the first electrode terminal 110 and the second electrode terminal 210 are connected correspondingly, so that the battery pack 100 charges the external device 200 or the external device 200 charges the battery pack 100. Moreover, the first communication terminal 120 and the second communication terminal 220 are connected correspondingly, the first transceiving module 10 is connected to the second transceiving module 20 by using the first communication terminal 120 and the second communication terminal 220 so as to carry out data transmission between the first transceiving module 10 and the second transceiving module 20. The data transmission voltage between the first transceiving module 10 and the first processing module 140 is the first transmission voltage, and the data transmission voltage between the second transceiving module 20 and the second processing module 240 is the second transmission voltage. When the first transceiving module 10 transmits data to the second transceiving module 20 or the second transceiving module 20 transmits data to the first transceiving module 10, the boost unit 400 between the first transceiving module 10 and the second transceiving module 20 adjusts the transmission voltage of the data to the preset voltage. The preset voltage is greater than the first transmission voltage and the second transmission voltage. Due to the boost unit 400 arranged between the first transceiving module 10 and the second transceiving module 20, the first transmission voltage of the first transceiving module 10 or the second transmission voltage of the second transceiving module 20 can be increased to the larger preset voltage, which can avoid the data transmission failure caused by interference with the transmitted data due to external interference.

In the above example, the first transceiving module 10 in the battery pack is configured not only to send and receive data, but also to switch the first transmission voltage outputted by the first processing module 140 to the preset voltage provided by the boost unit 400 when the battery pack sends out the data, and to switch the preset voltage of the data to the first transmission voltage when the battery pack receives the data, so the first transceiving module 10 is further used as a level shifter module. Similarly, the second transceiving module 20 in the external device is configured not only to send and receive data, but also to switch the second transmission voltage outputted by the second processing module 240 to the preset voltage provided by the boost unit 400 when the external device sends out the data, and to switch the preset voltage of the data to the second transmission voltage when the external device receives the data, so the second transceiving module 20 is further used as a level shifter module. The boost unit 400 is configured to provide the preset voltage, so the boost unit 400 is used as a preset voltage source for providing the preset voltage. In the examples below, in order to describe the technical solution of this application more clearly, referring to FIG. 5b, FIG. 6b, FIG. 7b, FIG. 8b, FIG. 9b and FIG. 10b, various examples of this application will be described by replacing the first transceiving module 10 with a first level shifter module 10, replacing the second transceiving module 20 with a second level shifter module 20 and replacing the boost unit 400 with a preset voltage source 400.

As shown in FIG. 5b and FIG. 6b, the battery pack 100 further includes a first processing module 140 and a first level shifter module 10. The first processing module 140 is electrically connected to the first level shifter module 10, and the first level shifter module 10 receives data from the first processing module 140 or sends data to the first processing module 140 at a first transmission voltage. The external device 200 further includes a second processing module 240 and a second level shifter module 20. The second processing module 240 is electrically connected to the second level shifter module 20, and the second level shifter module 20 receives data from the second processing module 240 or sends data to the second processing module 240 at a second transmission voltage.

When the battery pack 100 and the external device 200 are matched and connected, the first level shifter module 10 is connected to the second level shifter module 20 by using the first communication terminal 120 and the second communication terminal 220 so as to carry out data transmission between the first level shifter module 10 and the second level shifter module 20.

A preset voltage source 400 is arranged between the first level shifter module 10 and the second level shifter module 20. The preset voltage source 400 is configured to provide a preset voltage. When the first level shifter module 10 sends data to the second level shifter module 20, the first level shifter module 10 is configured to switch the first transmission voltage to the preset voltage, and the second level shifter module 20 is configured to switch the received preset voltage to the second transmission voltage. Alternatively, when the second level shifter module 20 sends data to the first level shifter module 10, the second level shifter module 20 is configured to switch the second transmission voltage to the preset voltage, and the first level shifter module 10 is configured to switch the received preset voltage to the first transmission voltage. The preset voltage is greater than the first transmission voltage and the second transmission voltage.

In this example, the first level shifter module 10 and the second level shifter module 20 themselves may not have the function of increasing a low voltage to a high voltage or reducing a high voltage to a low voltage by voltage conversion, but have the function of voltage switching. That is, the first transmission voltage and the preset voltage have been provided at an input end and an output end of the first level shifter module 10, and the first level shifter module 10 functions to switch the first transmission voltage of data received by the input end to the preset voltage of the output end, or to switch the received preset voltage to the first transmission voltage. The second transmission voltage and the preset voltage have been provided at an input end and an output end of the second level shifter module 20, and the second level shifter module 20 functions to switch the second transmission voltage of the received data to the preset voltage, or to switch the preset voltage to the second transmission voltage.

In another example, the first level shifter module 10 in the battery pack 100 and the second level shifter module 20 in the external device themselves may have the function of increasing a low voltage to a high voltage or reducing a high voltage to a low voltage by voltage conversion. In this case, there may be no need to arrange the preset voltage source. After the first processing module 140 in the battery pack 100 outputs data having the first transmission voltage, the first level shifter module 10 increases the first transmission voltage to the preset voltage by voltage conversion, and the second level shifter module 20 in the external device 200 reduces the preset voltage to the second transmission voltage by voltage conversion and then sends the data to the second processing module 240. When the external device 200 transmits data to the battery pack 100, after the second processing module 240 in the external device 200 outputs data having the second transmission voltage, the second level shifter module 20 increases the second transmission voltage to the preset voltage by voltage conversion, and the first level shifter module 10 in the battery pack 100 reduces the preset voltage to the first transmission voltage by voltage conversion and then sends the data to the first processing module 140.

The above data transmission system includes the battery pack 100 and the external device 200. When the battery pack 100 and the external device 200 are matched and connected, the first electrode terminal 110 and the second electrode terminal 210 are connected correspondingly, so that the battery pack 100 charges the external device 200 or the external device 200 charges the battery pack 100. Moreover, the first communication terminal 120 and the second communication terminal 220 are connected correspondingly, and the first level shifter module 10 is connected to the second level shifter module 20 by using the first communication terminal 120 and the second communication terminal 220 so as to carry out data transmission between the first level shifter module 10 and the second level shifter module 20. The data transmission voltage between the first level shifter module 10 and the first processing module 140 is the first transmission voltage, and the data transmission voltage between the second level shifter module 20 and the second processing module 240 is the second transmission voltage. When the first level shifter module 10 transmits data to the second level shifter module 20, the first level shifter module 10 is configured to switch the first transmission voltage to the preset voltage, and the second level shifter module is configured to switch the preset voltage to the second transmission voltage. Alternatively, when the second level shifter module 20 sends data to the first level shifter module 10, the second level shifter module 20 is configured to switch the second transmission voltage to the preset voltage, and the first level shifter module 10 is configured to switch the preset voltage to the first transmission voltage. The preset voltage is greater than the first transmission voltage and the second transmission voltage. Since the preset voltage source 400 is arranged between the first level shifter module 10 and the second level shifter module 20, during the data transmission between the battery pack 100 and the external device 200, the first transmission voltage in the battery pack or the second transmission voltage in the external device may be increased to the larger preset voltage. Due to the higher voltage of the data, the effect of external interference signals on the data is reduced, which thereby can avoid the data transmission failure caused by interference with the transmitted data due to external interference.

In this example, the battery pack 100 may be a lithium battery pack 100, and a plurality of lithium batteries are assembled inside the lithium battery pack 100. The method of assembling the lithium batteries may be determined according to actual needs. For example, a plurality of lithium batteries, each having a capacity of equal to or greater than 2 AH and a nominal voltage of 4 V, are arranged in parallel inside the lithium battery pack 100, and the lithium batteries are connected in series of 15 strings, so that the battery pack 100 has a nominal voltage of 60 V and a power of equal to or greater than 120 WH.

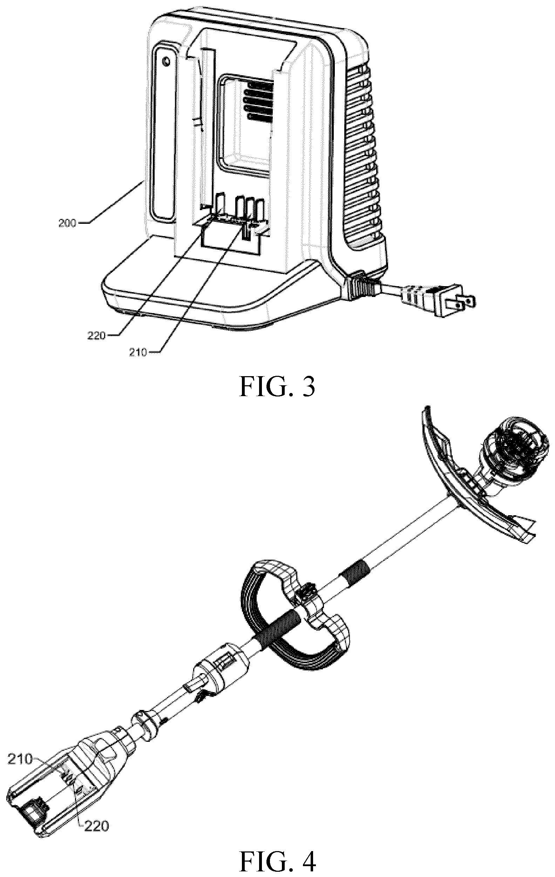

In this example, the external device 200 may include any of an electric tool and a charger. When the external device 200 is an electric tool, the first electrode terminal 110 of the battery pack 100 is connected to the second electrode terminal 210 of the electric tool. The battery pack 100 supplies power to the electric tool, and the battery pack 100 is discharged. FIG. 4 is an example of a grass trimmer. When the external device 200 is a charger, the first electrode terminal 110 of the battery pack 100 is connected to the second electrode terminal 210 of the charger. The charger supplies power to the battery pack 100, and the battery pack 100 is charged. FIG. 3 is an example of the charger.

Specifically, the first electrode terminal 110 may include a first positive terminal and a first negative terminal. The first positive terminal is connected to a positive electrode of the battery pack 100, and the first negative terminal is connected to a negative electrode of the battery pack 100. The second electrode terminal 210 may include a second positive terminal and a second negative terminal. When the battery pack 100 and the external device 200 are matched and connected, the first positive terminal is connected to the second positive terminal, and the first negative terminal is connected to the second negative terminal, such that the battery pack 100 is charged/discharged.

Moreover, when the battery pack 100 and the external device 200 are matched and connected, the first communication terminal 120 of the battery pack 100 and the second communication terminal 220 of the external device 200 are connected correspondingly, so as to realize transmission of various types of data, such as historical data, real-time state data and setting data.

In this example, the first electrode terminal 110 and the first communication terminal 120 in the battery pack 100 are located on a same female terminal element, and the second electrode terminal 210 and the second communication terminal 220 of the external device 200 are located on a same male terminal element. Of course, the electrode terminal and the communication terminal may alternatively be arranged separately, i.e., not integrated on a same terminal element.

In one example, the first transmission voltage is less than or equal to a withstand voltage of the first processing module 140, and the second transmission voltage is less than or equal to a withstand voltage of the second processing module 240. This can ensure that both the battery pack 100 and the external device 200 can work within a normal voltage range.

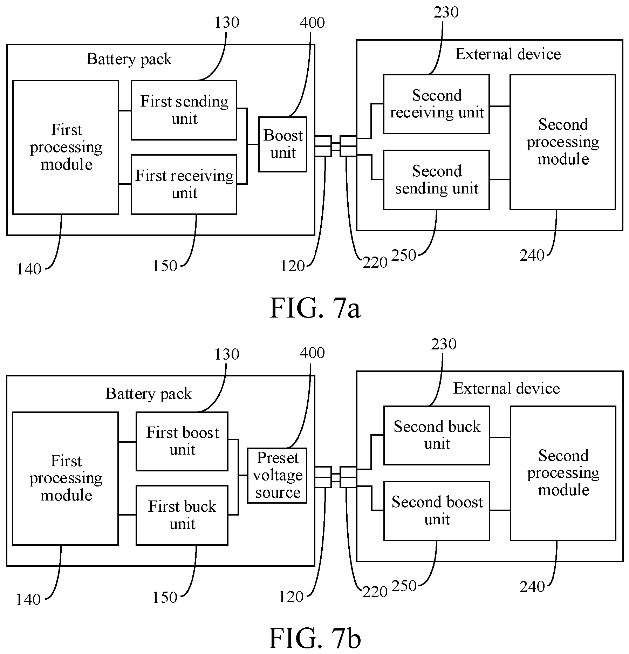

In one example, with reference to FIG. 7a, the first transceiving module 10 includes a first sending unit 130 and a first receiving unit 150. The second transceiving module 20 includes a second sending unit 250 and a second receiving unit 230. An output end of the first sending unit 130 and an input end of the first receiving unit 150 are connected to the first communication terminal 120. The first sending unit 130 is configured to receive data of the first processing module 140 and send the data to the external device 200 by using the first communication terminal 120. The first receiving unit 150 receives data of the external device 200 by using the first communication terminal 120 and sends the data to the first processing module 140. An input end of the second receiving unit 230 and an output end of the second sending unit 250 are connected to the second communication terminal 220. The second receiving unit 230 receives data of the battery pack 100 by using the second communication terminal 220 and sends the data to the second processing module 240. The second sending unit 250 is configured to receive data of the second processing module 240 and send the data to the battery pack 100 by using the second communication terminal 220.

When the battery pack 100 and the external device 200 are matched and connected, the first processing module 140 transmits data to the first sending unit 130 at the first transmission voltage, the boost unit 400 adjusts the transmission voltage of the data from the first transmission voltage to the preset voltage and sends the data to the second receiving unit 230 at the preset voltage, and the second receiving unit 230 adjusts the transmission voltage of the data from the preset voltage to the second transmission voltage and transmits the data to the second processing module 240 at the second transmission voltage; or the second processing module 240 transmits data to the second sending unit 250 at the second transmission voltage, the boost unit 400 adjusts the transmission voltage of the data from the second transmission voltage to the preset voltage and sends the data to the first receiving unit 150 at the preset voltage, and the first receiving unit 150 adjusts the transmission voltage of the data from the preset voltage to the first transmission voltage and transmits the data to the first processing module 140 at the first transmission voltage.

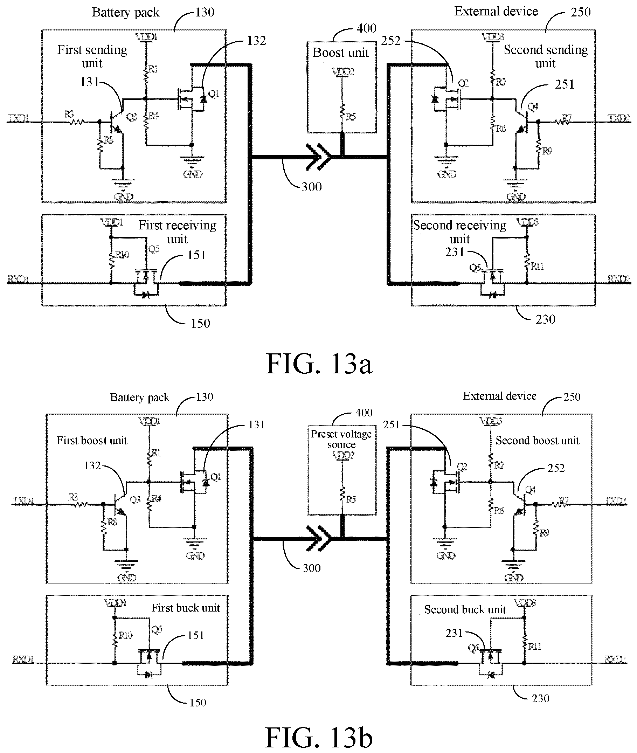

As can be seen from the above example, the first sending unit 130 in the first transceiving module 10 is configured not only to send data, but also to switch the first transmission voltage outputted by the first processing module 140 to the preset voltage provided by the preset voltage source 400, and the first receiving unit 150 is configured not only to receive data, but also to switch the preset voltage of the data to the first transmission voltage. Therefore, the first sending unit 130 may alternatively be used as a boost unit, and the first receiving unit 150 may alternatively be used as a buck unit. Similarly, the second sending unit 250 in the second transceiving module 20 is configured not only to send data, but also to switch the second transmission voltage outputted by the second processing module 240 to the preset voltage provided by the preset voltage source 400, and the second receiving unit 230 is configured not only to receive data, but also to switch the preset voltage of the data to the second transmission voltage. Therefore, the second sending unit 250 may alternatively be used as a boost unit, and the second receiving unit 230 may alternatively be used as a buck unit. In the examples below, in order to describe the technical solution of this application more clearly, referring to FIG. 7b and FIG. 13b, various examples of this application will be described by replacing the first sending unit 130 with a first boost unit 130, replacing the first receiving unit 150 with a first buck unit 150, replacing the second sending unit 250 with a second boost unit 250 and replacing the second receiving unit 230 with a second buck unit 230.

With reference to FIG. 7b, the first level shifter module 10 includes a first boost unit 130 and a first buck unit 150. The second level shifter module 20 includes a second boost unit 250 and a second buck unit 230.

An output end of the first boost unit 130 and an input end of the first buck unit 150 are connected to the first communication terminal 120. The first boost unit 130 is configured to receive data of the first processing module 140 and send the data to the external device 200 by using the first communication terminal 120. The first buck unit 150 receives data of the external device 200 by using the first communication terminal 120 and sends the data to the first processing module 140.

An input end of the second buck unit 230 and an output end of the second boost unit 250 are connected to the second communication terminal 220. The second buck unit 230 receives data of the battery pack 100 by using the second communication terminal 220 and sends the data to the second processing module 240. The second boost unit 250 is configured to receive data of the second processing module 240 and send the data to the battery pack 100 by using the second communication terminal 220.

The first processing module 140 transmits data to the first boost unit 130 at the first transmission voltage, the first boost unit 130 switches a transmission voltage of the data from the first transmission voltage to the preset voltage of the preset voltage source and sends the data to the second buck unit 230 at the preset voltage, and the second buck unit 230 switches the transmission voltage of the data from the preset voltage to the second transmission voltage and transmits the data to the second processing module 240 at the second transmission voltage; and/or the second processing module 240 transmits data to the second boost unit 250 at the second transmission voltage, the preset voltage source 400 adjusts the transmission voltage of the data from the second transmission voltage to the preset voltage and sends the data to the first buck unit 150 at the preset voltage, and the first buck unit 150 adjusts the transmission voltage of the data from the preset voltage to the first transmission voltage and transmits the data to the first processing module 140 at the first transmission voltage.

That is, according to the data transmission system provided by this example, the battery pack 100 may only have the first boost unit 130, and the external device 200 may only have the second buck unit 230; or the battery pack 100 may only have the first buck unit 150, and the external device 200 may only have the second boost unit 250; or the battery pack 100 may have both the first boost unit 130 and the first buck unit 150, and the external device 200 may have both the second boost unit 250 and the second buck unit 230.

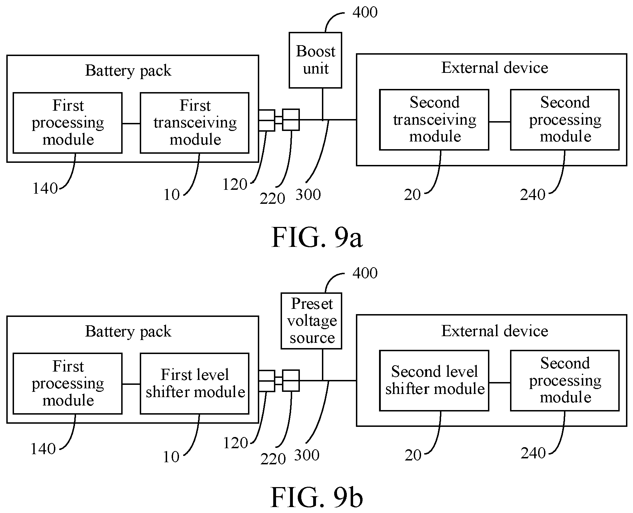

In a specific example, with reference to FIG. 9b, when no data is transmitted between the battery pack 100 and the external device 200, the bus is in an idle state, and the voltage on the bus is equal to a preset voltage VDD2 of the preset voltage source 400.

When the battery pack 100 sends data to the external device 200, the data sent by the first processing module 140 in the battery pack 100 has a voltage of 0 to VDD1. VDD1 is the maximum withstand voltage of the first processing module 140 in the battery pack 100. The data is sent to the bus via the first boost unit 130 in the battery pack 100, and the preset voltage source 400 on the bus may pull up the voltage of the transmitted data to the preset voltage VDD2. VDD2 is greater than VDD1. The first buck unit 150 in the external device 200 receives the data and reduces the voltage of the data to 0 to VDD3. VDD3 is the maximum withstand voltage of the second processing module 240 in the external device 200. The first buck unit 150 sends the data having the reduced voltage to the second processing module 240, and the second processing module 240 processes the data.

When the external device 200 sends data to the battery pack 100, the voltage of the data sent by the second processing module 240 in the external device 200 is 0 to VDD3. VDD3 is the maximum withstand voltage of the second processing module 240 in the external device 200. The data is sent to the bus via the second boost unit 250 in the external device 200, and the preset voltage source 400 on the bus pulls up the voltage of the transmitted data to the preset voltage VDD2. VDD2 is greater than VDD3. The second buck unit 230 in the battery pack 100 receives the data and reduces the voltage of the data to 0 to VDD1. VDD1 is the maximum withstand voltage of the first processing module 140 in the battery pack 100. The second buck unit 230 sends the data having the reduced voltage to the first processing module 140, and the first processing module 140 processes the data.

In one example, the preset voltage may be adjusted according to actual needs.

In one example, with reference to FIG. 5b, the preset voltage source 400 may be arranged in the battery pack 100 and connected between the first level shifter module 10 and the first communication terminal 120. With reference to FIG. 6b, the preset voltage source 400 may alternatively be arranged in the external device 200 and connected between the second level shifter module 20 and the second communication terminal 220. The specific arrangement may depend on the actual needs.

In actual applications, a user often requires a long battery life. For example, in a case where the user has a garden with a large area or needs to cut lots of wood, this requires the electric tool to have a long battery life to successfully complete the work. A battery pack with a lower capacity usually cannot have a longer battery life. Therefore, in order to achieve a long battery life, it is required to increase the number of batteries as much as possible to increase the capacity of the battery pack. A battery pack with a higher capacity has a higher weight. If the battery pack is directly assembled to the electric tool, the user will have a poor experience after holding the electric tool for a long time. In order to improve the user experience and make the user hold the electric tool easier, the typical way is to adopt a backpack battery pack at present.

Generally, the backpack battery pack is connected to the external device such as the electric tool or the charger by using a long data transmission line.

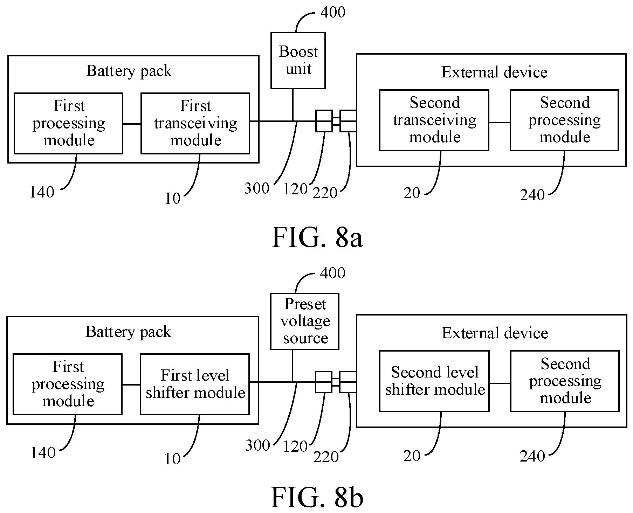

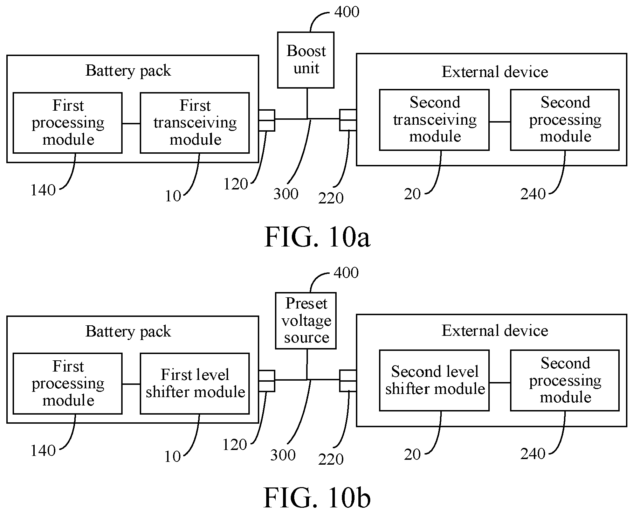

Therefore, in another example, with reference to FIG. 8b, a data transmission line 300 is arranged between the first level shifter module 10 and the first communication terminal 120, or with reference to FIG. 9b, a data transmission line 300 is arranged between the second level shifter module 20 and the second communication terminal 220, or with reference to FIG. 10b, a data transmission line 300 is arranged between the first communication terminal 120 and the second communication terminal 220. The preset voltage source 400 is arranged on the data transmission line 300.

**In** general cases, compared with the connection without a data transmission line, the long data transmission line 300 is more prone to voltage attenuation, and the transmitted data is more susceptible to interference from external interference signals. **In** view of this, the preset voltage source 400 is arranged on the data transmission line 300, so that the data transmission voltage on the data transmission line 300 between the first level shifter module 10 and the second level shifter module 20 is kept at a high preset voltage, which has a significant anti-interference effect.

Specifically, the data transmission line 300 may be arranged between the first level shifter module 10 and the first communication terminal 120, that is, the first level shifter module 10 in the battery pack 100 extends the first communication terminal 120 by using the data transmission line 300 (with reference to FIG. 2), so that the battery pack 100 can be remotely connected to the external device 200 by using the extended first communication terminal 120.

As an alternative implementation, the data transmission line 300 may alternatively be arranged between the second level shifter module 20 and the second communication terminal 220, that is, the second level shifter module 20 in the external device 200 extends the second communication terminal 220 by using the data transmission line 300, so that the external device 200 can be remotely connected to the battery pack 100 by using the extended second communication terminal 220.

As another alternative implementation, the effect of this application may alternatively be implemented by connecting two ends of the data transmission line 300 respectively to the first communication terminal 120 of the battery pack 100 and the second communication terminal 220 of the external device 200.

In the above example, when the data transmission line 300 is used for data transmission, the preset voltage of the preset voltage source 400 may be adjusted according to a length of the data transmission line 300. Specifically, the larger the length of the data transmission line 300, the higher the preset voltage of the preset voltage source 400. Since long-line transmission is more susceptible to interference, it is accordingly required to increase the preset voltage of the preset voltage source to improve the anti-interference performance of data transmission.

In one example, the first boost unit 130 includes a first switching subunit 131. The first switching subunit 131 is arranged between the first processing module and the first communication terminal. When the first boost unit 130 receives a first type of data, the first switching subunit 131 is turned on such that the preset voltage source 400 is connected to a low potential. When the first boost unit 130 receives a second type of data, the first switching subunit 131 is turned off such that the preset voltage source 400 outputs the preset voltage to the second buck unit 230.

Specifically, the first switching subunit 131 has a control end, a first end and a second end. The control end of the first switching subunit 131 is connected to the first processing module 140 and configured to receive data from the first processing module 140. The first end of the first switching subunit 131 is connected to the preset voltage source 400. The second end of the first switching subunit 131 is connected to a ground end. In this example, the first switching subunit 131 may be a field effect transistor, specifically a P-channel field effect transistor, configured to be turned on under the action of a low-level data signal and turned off under the action of a high-level data signal. When the control end of the first switching subunit 131 receives the first type of data, the first switching subunit 131 is turned on, and the preset voltage source is grounded through the first switching subunit 131, so the data transmitted on the bus between the battery pack 100 and the external device 200 is low-level data, thereby realizing transmission of the first type of data. When the control end of the first switching subunit 131 receives the second type of data having the first transmission voltage, the first switching subunit 131 is turned off, and the preset voltage source is connected to the bus, so the voltage on the bus is the preset voltage. Thereby, the first switching subunit 131 can switch the voltage from the first transmission voltage to the preset voltage.

In this example, the first type of data may be low-level data, i.e., data "0" in the digital signal, and the second type of data may be high-level data, that is, data "1" in the digital signal. The data transmitted between the battery pack 100 and the external device 200 is complex waveform data including a plurality of first type of data and a plurality of second type of data, such as 0101001101.... The data is transmitted in the battery pack at the first transmission voltage. After the data passes through the first boost unit in the battery pack 100, the magnitude of the voltage of the data is pulled up to the preset voltage, so the data is transmitted on the bus at the preset voltage. After the external device 200 receives the data, the transmission voltage of the data is pulled down to the second transmission voltage, so that the data is transmitted in the external device 200 at the second transmission voltage. Since the data is transmitted on the bus at a higher transmission voltage, the external interference signals can hardly affect the data, which thereby can improve the anti-interference performance of data transmission.

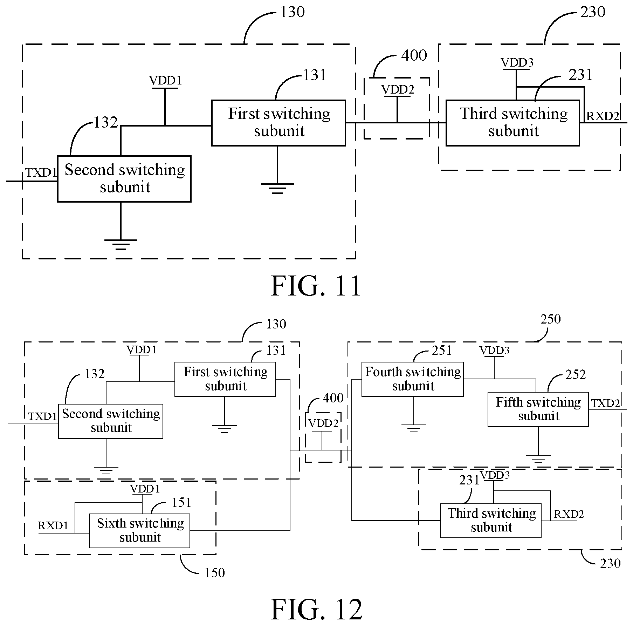

As an alternative implementation, as shown in FIG. 11, the first boost unit 130 includes a first switching subunit 131 and a second switching subunit 132. The second switching subunit 132 is arranged between the first processing module 140 and the first switching subunit 131. When the first boost unit 130 receives the first type of data, the second switching subunit 132 is turned off, and the first switching subunit 131 is turned on such that the preset voltage source 400 is connected to the low potential. When the first boost unit 130 receives the second type of data, the second switching subunit 132 is turned on, and the first switching subunit 131 is turned off such that the preset voltage source 400 outputs the preset voltage to the second buck unit.

In this example, the control end of the first switching subunit 131 is connected to the first processing module 140 and configured to receive data from the first processing module 140. The first switching subunit 131 is arranged between the control end of the second switching subunit 132 and the ground end. The second switching subunit 132 is arranged between the preset voltage source 400 and the ground end. The control end of the second switching subunit 132 is further connected to a power end of the first transmission voltage. Specifically, the first switching subunit 131 has a control end, a first end and a second end. The control end of the first switching subunit 131 is connected to the first processing module 140 and configured to receive data from the first processing module 140. The first end of the first switching subunit 131 is respectively connected to the control end of the second switching subunit 132 and the power end of the first transmission voltage. The secong end of the first switching subunit 131 is connected to the ground end. The second switching subunit 132 has a control end, a first end and a second end. The first end of the second switching subunit 132 is connected to the boost unit 400, and the second end of the second switching subunit 132 is connected to the ground end.

When the control end of the first switching subunit 131 receives low-level data, the first switching subunit 131 is turned off, that is, the first end and the second end of the first switching subunit 131 are disconnected, so that the control end of the second switching subunit 132 is connected to the power end of the first transmission voltage. Thereby, the second switching subunit 132 is turned on under the action of the first transmission voltage, and the preset voltage source 400 is connected to the ground end, so the data transmitted on the bus is low-level data. When the control end of the first switching subunit 131 receives high-level data having the first transmission voltage, the first switching subunit 131 is turned on, that is, the first end and the second end of the first switching subunit 131 are connected, so that the control end of the second switching subunit 132 is connected to the ground end by using the first switching subunit 131. Thereby, the second switching subunit 132 is turned off, and the preset voltage source 400 is disconnected from the ground end, so the transmission voltage of the data on the bus is the preset voltage.

The battery pack 100 transmits the first type of data to the external device 200: the first processing module 140 sends the first type of data to the control end of the first switching subunit 131, and the first switching subunit 131 is in an off state under the action of the first type of data, that is, the control end of the second switching subunit 132 is disconnected from the ground end and connected to the power end of the first transmission voltage. At this time, the second switching subunit 132 is in an on state, and the preset voltage source 400 is connected to the ground end. Since the preset voltage source 400 in this example is arranged on the bus, the bus is grounded, that is, the bus has a potential of about 0. Under the cooperation of the second buck unit 230, the low-level data (data "0") is transmitted.

The battery pack 100 transmits the second type of data to the external device 200: the first processing module 140 sends the second type of data to the control end of the first switching subunit 131, and the first switching subunit 131 is in an on state under the action of the second type of data, that is, the control end of the second switching subunit 132 is connected to the ground end. The second switching subunit 132 is in an off state, and the voltage of the bus is pulled up to the preset voltage VDD2 by the preset voltage source 400. Under the cooperation of the second buck unit 230, the data "1" is transmitted.

In one example, with reference to FIG. 13b, a resistor R1 is connected between the control end of the first switching subunit 131 and the power end of the first transmission voltage, and the control end of the first switching subunit 131 and the ground end are connected with a resistor R4. R1 and R4 act as a voltage divider. A resistor R3 is further connected in series between the control end of the second switching subunit 132 and the output end of the first processing module 140 and configured to limit the current. A resistor R8 is further connected in parallel between the control end of the second switching subunit 132 and the ground end to make the first switching subunit 131 operate stably.

In this example, the first switching subunit 131 and the second switching subunit 132 may be switching transistors. For example, the first switching subunit 131 is a field effect transistor Q1, and the second switching subunit 132 is a triode Q3. Specifically, the first switching subunit 131 may be an N-channel field effect transistor, configured to be turned on under the action of a high-level signal and turned off under the action of a low-level signal, and the second switching subunit 132 may be an NPN type triode, configured to be turned on under the action of a high-level signal and turned off under the action of a low-level signal.

In one example, with reference to FIG. 13b, the preset voltage source 400 includes a power end of a preset voltage. The power end of the preset voltage is connected to the first level shifter module 10 and the second level shifter module 20 by using a first pull-up resistor. For example, the first pull-up resistor is a resistor R5.

In one example, with reference to FIG. 12, the second buck unit 230 includes a third switching subunit 231. A control end of the third switching subunit 231 is connected to a power end of the second transmission voltage. The third switching subunit 231 is arranged between the preset voltage source 400 and an output end of the second buck unit 230, and the output end of the second buck unit 230 is further connected to the power end of the second transmission voltage. When the second buck unit 230 receives the first type of data, the third switching subunit 231 is turned on. When the second buck unit 230 receives the second type of data, the third switching subunit 231 is turned off.

Specifically, the third switching subunit 231 may be a three-end control switch, that is, the third switching subunit 231 has a control end, a first end and a second end. The control end of the third switching subunit 231 is connected to the power end of the second transmission voltage. The first end of the third switching subunit 231 is respectively connected to the output end of the second buck unit 230 and the power end of the second transmission voltage. The second end of the third switching subunit 231 is connected to the preset voltage source 400.

When the second buck unit 230 receives the first type of data, the third switching subunit 231 connects the preset voltage source 400 to the output end of the second buck unit 230. When the second buck unit 230 receives the second type of data, the third switching subunit 231 disconnects the preset voltage source 400 from the output end of the second buck unit 230, and the output end of the second buck unit 230 is connected to the power end of the second transmission voltage.

Specifically, when the battery pack 100 transmits the first type of data "0" to the external device 200, the bus has a potential of about 0. At this time, the third switching subunit 231 is in an on state, and the output end of the second buck unit 230 is connected to the preset voltage source 400, thereby realizing transmission of the first type of data "0". When the battery pack 100 transmits the second type of data "1" to the external device 200, the bus has a potential of the preset voltage VDD2. At this time, the third switching subunit 231 is in an off state, and the output end of the second buck unit 230 is connected to the power end of the second transmission voltage VDD3, thereby realizing transmission of the second type of data "1".

Before the preset voltage source is added, the transmission voltage of data on the bus is equal to the transmission voltage of the first processing module or the second processing module. Due to the withstand voltage ranges of the first processing module and the second processing module, the first transmission voltage and the second transmission voltage are small. During data transmission, if there are external interference signals, the interference signals will account for a large proportion of the first transmission voltage and the second transmission voltage. Therefore, after the interference signals are superimposed on the first transmission voltage or the second transmission voltage, there will be serious distortion of the first transmission voltage or the second transmission voltage, so that the signal received by the receiver will be seriously distorted, which affects the processing result. After the preset voltage source is added, since the transmission voltage on the bus has been increased to the preset voltage, even if there is an external interference signal, the interference signal will account for a small proportion of the preset voltage. Even if the interference signal is superimposed on the preset voltage, it has little effect on the magnitude of the preset voltage on the bus, so the processing result of the receiver will not be affected, thereby improving the stability and accuracy of data transmission.

In one example, with reference to FIG. 13b, a resistor R11 is further connected between the output end of the second buck unit 230 and the power end of the second transmission voltage so as to make the third switching subunit 231 work stably.

In one example, the third switching subunit 231 may be a switching transistor. For example, the third switching subunit 231 is a field effect transistor Q6. In this example, the third switching subunit 231 may be an N-channel field effect transistor, configured to be turned on under the action of a high-level signal and turned off under the action of a low-level signal.

For the second boost unit 250 in the external device 200 and the first buck unit 150 in the battery pack 100, the structures are respectively similar to those of the first boost unit 130 in the battery pack 100 and the second buck unit 230 in the external device 200, and are only briefly described below:
The second boost unit 250 includes a fourth switching subunit 251. The fourth switching subunit 251 is arranged between the second processing module 240 and the preset voltage source 400. The fourth switching subunit 251 is configured to receive data sent by the second processing module 240 and be turned on or off according to the type of data. When the second boost unit 250 receives the first type of data, the fourth switching subunit 251 is turned on such that the preset voltage source 400 is connected to a low potential. When the second boost unit 250 receives the second type of data, the fourth switching subunit 251 is turned off such that the preset voltage source 400 outputs the preset voltage to the first buck unit 150.

Specifically, the fourth switching subunit 251 has a control end, a first end and a second end. The control end of the fourth switching subunit 2511 is connected to the second processing module 240 and configured to receive data from the second processing module 240. The first end of the fourth switching subunit 251 is connected to the preset voltage source 400, and the second end of the fourth switching subunit 251 is connected to the ground end. In this example, the fourth switching subunit 251 may be a field effect transistor, specifically a P-channel field effect transistor, configured to be turned on under the action of a low-level data signal and turned off under the action of a high-level data signal. When the control end of the fourth switching subunit 251 receives the low-level data, the fourth switching subunit 251 is turned on, and the preset voltage source 400 is grounded through the fourth switching subunit 251, so the data transmitted on the bus between the external device 200 and the battery pack 100 is low-level data, thereby realizing transmission of the first type of data. When the control end of the fourth switching subunit 251 receives the high-level data having the second transmission voltage, the fourth switching subunit 251 is turned off, and the preset voltage source is connected to the bus, so the voltage on the bus is the preset voltage. Thereby, the fourth switching unit 251 can switch the voltage from the second transmission voltage to the preset voltage.

As an alternative implementation, with reference to FIG. 12, the second boost unit 250 includes a fourth switching subunit 251 and a fifth switching subunit 252. The fifth switching subunit 252 is arranged between the fourth switching subunit 251 and the second processing module 240. The fifth switching subunit 252 is configured to receive data sent by the second processing module 240 and be turned on or off according to the type of data. When the second boost unit 250 receives the first type of data, the fifth switching subunit 252 is turned off, and the fourth switching subunit 251 is turned on such that the preset voltage source 400 is connected to the low potential. When the second boost unit 250 receives the second type of data, the fifth switching subunit 252 is turned on, and the fourth switching subunit 251 is turned off such that the preset voltage source 400 outputs the preset voltage to the first buck unit 150.

Specifically, the control end of the fourth switching subunit 251 receives data, and the fourth switching subunit 251 is arranged between the control end of the fifth switching subunit 252 and the ground end. The fifth switching subunit 252 is arranged between the preset voltage source 400 and the ground end. The control end of the fifth switching subunit 252 is further connected to the power end of the second transmission voltage. When the control end of the fourth switching subunit 251 receives the first type of data, the fourth switching subunit 251 disconnects the control end of the fifth switching subunit 252 from the ground end, the control end of the fifth switching subunit 252 is connected to the power end of the second transmission voltage, and the fifth switching subunit 252 connects the preset voltage source 400 to the ground end. When the control end of the fourth switching subunit 251 receives the second type of data, the fourth switching subunit 251 connects the control end of the fifth switching subunit 252 to the ground end, and the fifth switching subunit 252 disconnects the preset voltage source 400 from the ground end.

In one example, with reference to FIG. 13b, a resistor R2 is connected between the control end of the fourth switching subunit 251 and the power end of the second transmission voltage, and the control end of the fourth switching subunit 251 and the ground end are connected with a resistor R6. R2 and R6 act as a voltage divider. A resistor R7 is further connected in series between the control end of the fifth switching subunit 252 and the output end of the second processing module 240 and configured to limit the current. A resistor R9 is further connected in parallel between the control end of the fifth switching subunit 252 and the ground end to make the fifth switching subunit 252 operate stably.

In this example, the fourth switching subunit 251 and the fifth switching subunit 252 may be switching transistors. For example, the fourth switching subunit 251 is a field effect transistor Q2, and the fifth switching subunit 252 is a triode Q4. The fourth switching subunit 251 may be an N-channel field effect transistor, configured to be turned on under the action of a high-level signal and turned off under the action of a low-level signal. The fifth switching subunit 252 may be an NPN type triode, configured to be turned on under the action of a high-level signal and turned off under the action of a low-level signal.

In one example, with reference to FIG. 12, the first buck unit 150 includes a sixth switching subunit 151. A control end of the sixth switching subunit 151 is connected to the power end of the first transmission voltage. The sixth switching subunit 151 is arranged between the preset voltage source 400 and the output end of the first buck unit 150, and the output end of first buck unit 150 is further connected to the power end of the first transmission voltage. When the first buck unit 150 receives the first type of data, the sixth switching subunit 151 is turned on such that the output end of the first buck unit 150 is connected to the low potential. When the first buck unit 150 receives the second type of data, the sixth switching subunit 151 is turned off such that the power end of the first transmission voltage outputs the first transmission voltage to the output end of the first buck unit 150.

Specifically, the sixth switching subunit 151 may be a three-end control switch, that is, the sixth switching subunit 151 has a control end, a first end and a second end. The control end of the sixth switching subunit 151 is connected to the power end of the first transmission voltage. The first end of the sixth switching subunit 151 is respectively connected to the output end of the first buck unit 150 and the power end of the first transmission voltage. The second end of the sixth switching subunit 151 is connected to the preset voltage source 400.

When the first buck unit 150 receives the first type of data by using the first communication terminal 120, the sixth switching subunit 151 connects the preset voltage source 400 to the output end of the first buck unit 150. When the first buck unit 150 receives the second type of data by using the first communication terminal 120, the sixth switching subunit 151 disconnects the preset voltage source 400 from the output end of the first buck unit 150, and the output end of the first buck unit 150 is connected to the power end of the first transmission voltage.

In one example, with reference to FIG. 13b, a resistor R10 is further connected between the output end of the first buck unit 150 and the power end of the first transmission voltage so as to make the sixth switching subunit 151 work stably.

In one example, the sixth switching subunit 151 may be a switching transistor. For example, the sixth switching subunit 151 is a field effect transistor Q5. In this example, the sixth switching subunit 151 may be an N-channel field effect transistor, configured to be turned on under the action of a high-level signal and turned off under the action of a low-level signal.

In the above example, the first boost unit 130 and the first buck unit 150 in the first level shifter module 10, and the second boost unit 250 and the second buck unit 230 in the second level shifter module 20 all realize voltage switching by using the switching unit. Therefore, the circuit structures of the first level shifter module 10 and the level shifter module 20 can be simplified, and the anti-interference purpose can be achieved by pushing the high-level signal by the low-level signal only by using several switching units. Compared with the method of achieving voltage switching by using transformers, the circuit including the switching units has the advantages of simple structure, high reliability (not easily damaged) and low cost.

It should be noted that the preset voltage in this example is less than absolute maximum ratings of the field effect transistors Q1, Q2, Q5 and Q6.

Still another example of this application provides a battery pack 100. The battery pack 100 may be directly inserted into an external device, or connected to the external device through a data transmission line. As shown in FIG. 5b, the battery pack 100 includes a first processing module 140, a first level shifter module 10, a first electrode terminal 110 and a first communication terminal 120. The first processing module 140 is electrically connected to the first level shifter module 10. When the battery pack 100 and the external device 200 are matched and connected, the first electrode terminal 110 of the battery pack is connected to a second electrode terminal 210 of the external device, the first communication terminal 120 of the battery pack is connected to a second communication terminal 220 of the external device 200, and the first level shifter module 10 is connected to a second level shifter module 20 of the external device 200 by using the first communication terminal 120 and the second communication terminal 220. The external device 200 further includes a second processing module 240. The second processing module 240 is electrically connected to the second level shifter module 20. Data transmission is carried out between the first processing module 140 and the first level shifter module 10 at a first transmission voltage, and data transmission is carried out between the second processing module 240 and the second level shifter module 20 at a second transmission voltage.

The battery pack 100 further includes a preset voltage source 400. The preset voltage source 400 is configured to provide a preset voltage. The preset voltage source 400 is connected to the first level shifter module 10. When the first level shifter module 10 sends data to the second level shifter module 20, the first level shifter module 10 switches the first transmission voltage of the data to the preset voltage and sends the data to the second level shifter module 20. When the first level shifter module 10 receives data sent by the second level shifter module 20, the first level shifter module 10 is configured to switch the preset voltage to the first transmission voltage. The preset voltage is greater than the first transmission voltage.

**In** an example, the first level shifter module 10 includes a first boost unit 130 and a first buck unit 150, and the second level shifter module 20 includes a second boost unit 250 and a second buck unit 230. The first processing module 140 transmits data to the first boost unit 130 at the first transmission voltage, the first boost unit 130 adjusts a transmission voltage of the data from the first transmission voltage to the preset voltage and sends the data to the second buck unit 230 at the preset voltage, and the second buck unit 230 adjusts the transmission voltage of the data from the preset voltage to the second transmission voltage and transmits the data to the second processing module 240 at the second transmission voltage; and/or the second processing module 240 transmits data to the second boost unit 250 at the second transmission voltage, the second boost unit 250 adjusts the transmission voltage of the data from the second transmission voltage to the preset voltage and sends the data to the first buck unit 150 at the preset voltage, and the first buck unit 150 adjusts the transmission voltage of the data from the preset voltage to the first transmission voltage and transmits the data to the first processing module at the first transmission voltage.

**In** an example, the first transmission voltage is less than or equal to a withstand voltage of the first processing module 140. The second transmission voltage is less than or equal to a withstand voltage of the second processing module 240.

**In** an example, the preset voltage source 400 is arranged in the battery pack and connected between the first level shifter module 10 and the first communication terminal 120.

**In** an example, the first boost unit 130 includes a first switching subunit 131. The first switching subunit 131 is arranged between the first processing module and the first communication terminal. When the first boost unit 130 receives a first type of data, the first switching subunit 131 is turned on such that the preset voltage source 400 is connected to a low potential. When the first boost unit 130 receives a second type of data, the first switching subunit 131 is turned off such that the preset voltage source 400 outputs the preset voltage to the second buck unit 230.

**In** an example, the first boost unit 130 includes a first switching subunit 131 and a second switching subunit 132. The second switching subunit 132 is arranged between the first processing module 140 and the first switching subunit 131. When the first boost unit 130 receives the first type of data, the second switching subunit 132 is turned off, and the first switching subunit 131 is turned on such that the preset voltage source 400 is connected to the low potential. When the first boost unit 130 receives the second type of data, the second switching subunit 132 is turned on, and the first switching subunit 131 is turned off such that the preset voltage source 400 outputs the preset voltage to the second buck unit.

**In** an example, the second buck unit 230 includes a third switching subunit 231. A control end of the third switching subunit 231 is connected to a power end of the second transmission voltage. The third switching subunit 231 is arranged between the preset voltage source 400 and an output end of the second buck unit 230, and the output end of the second buck unit 230 is further connected to the power end of the second transmission voltage. When the second buck unit 230 receives the first type of data, the third switching subunit 231 is turned on. When the second buck unit 230 receives the second type of data, the third switching subunit 231 is turned off.

In an example, the second boost unit 250 includes a fourth switching subunit 251. The fourth switching subunit 251 is arranged between the second processing module 240 and the preset voltage source 400. The fourth switching subunit 251 is configured to receive data sent by the second processing module 240 and be turned on or off according to the type of data. When the second boost unit 250 receives the first type of data, the fourth switching subunit 251 is turned on such that the preset voltage source 400 is connected to a low potential. When the second boost unit 250 receives the second type of data, the fourth switching subunit 251 is turned off such that the preset voltage source 400 outputs the preset voltage to the first buck unit 150.

In an example, the second boost unit 250 includes a fourth switching subunit 251 and a fifth switching subunit 252. The fifth switching subunit 252 is arranged between the fourth switching subunit 251 and the second processing module 240. The fifth switching subunit 252 is configured to receive data sent by the second processing module 240 and be turned on or off according to the type of data. When the second boost unit 250 receives the first type of data, the fifth switching subunit 252 is turned off, and the fourth switching subunit 251 is turned on such that the preset voltage source 400 is connected to the low potential. When the second boost unit 250 receives the second type of data, the fifth switching subunit 252 is turned on, and the fourth switching subunit 251 is turned off such that the preset voltage source 400 outputs the preset voltage to the first buck unit 150.

In an example, the first buck unit 150 includes a sixth switching subunit 151. A control end of the sixth switching subunit 151 is connected to the power end of the first transmission voltage. The sixth switching subunit 151 is arranged between the preset voltage source 400 and the output end of the first buck unit 150, and the output end of first buck unit 150 is further connected to the power end of the first transmission voltage. When the first buck unit 150 receives the first type of data, the sixth switching subunit 151 is turned on such that the output end of the first buck unit 150 is connected to the low potential. When the first buck unit 150 receives the second type of data, the sixth switching subunit 151 is turned off such that the power end of the first transmission voltage outputs the first transmission voltage to the output end of the first buck unit 150.

The battery pack provided by this example has the same inventive concept as the data transmission system provided by Example I. For the specific structures of modules and units in the battery pack, reference may be made to the description above, and details will not be repeated here.

The above battery pack 100 includes the first processing module 140, the first level shifter module 10 and the preset voltage source 400. Data transmission is carried out between the first processing module 140 and the first level shifter module 10 at the first transmission voltage. When the battery pack 100 carries out data transmission with the external device 200, the first level shifter module 10 may convert the first transmission voltage to the preset voltage. The preset voltage is greater than the first transmission voltage. Therefore, even if there is an interference signal in the process of transmitting data from the battery pack 100 to the external device 200, due to the high preset voltage, after the voltage of the interference signal is superimposed on the preset voltage, it has little effect on the transmission voltage of the data, and the data can still be normally transmitted into the external device 200, which thereby can improve the reliability and stability of data transmission.

Still another example of this application provides a power supply apparatus, capable of data transmission with an external device through a data transmission line. The power supply apparatus may include a battery pack and a preset voltage source. The battery pack 100 includes a first processing module 140, a first level shifter module 10, a first electrode terminal 110 and a first communication terminal 120. The first processing module 140 is electrically connected to the first level shifter module 10. When the battery pack 100 and the external device 200 are matched and connected, the first electrode terminal 110 of the battery pack is connected to a second electrode terminal 210 of the external device, the first communication terminal 120 of the battery pack is connected to a second communication terminal 220 of the external device 200, and the first level shifter module 10 is connected to a second level shifter module 20 of the external device 200 by using the first communication terminal 120 and the second communication terminal 220. The external device 200 further includes a second processing module 240. The second processing module 240 is electrically connected to the second level shifter module 20. Data transmission is carried out between the first processing module 140 and the first level shifter module 10 at a first transmission voltage, and data transmission is carried out between the second processing module 240 and the second level shifter module 20 at a second transmission voltage.

The preset voltage source 400 is configured to provide a preset voltage. The preset voltage source 400 is connected to the first level shifter module 10. When the first level shifter module 10 sends data to the second level shifter module 20, the first level shifter module 10 switches the first transmission voltage of the data to the preset voltage and sends the data to the second level shifter module 20. When the first level shifter module 10 receives data sent by the second level shifter module 20, the first level shifter module 10 is configured to switch the preset voltage to the first transmission voltage. The preset voltage is greater than the first transmission voltage.

The battery pack in this example is basically the same as the battery pack provided by the foregoing example, except that: in the foregoing example, the preset voltage source is arranged in the battery pack, but in this example, the preset voltage source is arranged outside the battery pack. For the specific structure of the battery pack, reference may be made to the foregoing example, and details will not be repeated here. **In** this example, the power supply apparatus may be a backpack power apparatus. The backpack power apparatus may be provided with the battery pack. The preset voltage source is arranged on the backpack power apparatus and may be connected to the external device through a data transmission line.

In an example, the first level shifter module 10 includes a first boost unit 130 and a first buck unit 150, and the second level shifter module 20 includes a second boost unit 250 and a second buck unit 230. The first processing module 140 transmits data to the first boost unit 130 at the first transmission voltage, the first boost unit 130 adjusts a transmission voltage of the data from the first transmission voltage to the preset voltage and sends the data to the second buck unit 230 at the preset voltage, and the second buck unit 230 adjusts the transmission voltage of the data from the preset voltage to the second transmission voltage and transmits the data to the second processing module 240 at the second transmission voltage; and/or the second processing module 240 transmits data to the second boost unit 250 at the second transmission voltage, the second boost unit 250 adjusts the transmission voltage of the data from the second transmission voltage to the preset voltage and sends the data to the first buck unit 150 at the preset voltage, and the first buck unit 150 adjusts the transmission voltage of the data from the preset voltage to the first transmission voltage and transmits the data to the first processing module at the first transmission voltage.

In an example, the first transmission voltage is less than or equal to a withstand voltage of the first processing module 140. The second transmission voltage is less than or equal to a withstand voltage of the second processing module 240.

In an example, the first boost unit 130 includes a first switching subunit 131. The first switching subunit 131 is arranged between the first processing module and the first communication terminal. When the first boost unit 130 receives a first type of data, the first switching subunit 131 is turned on such that the preset voltage source 400 is connected to a low potential. When the first boost unit 130 receives a second type of data, the first switching subunit 131 is turned off such that the preset voltage source 400 outputs the preset voltage to the second buck unit 230.

In an example, the first boost unit 130 includes a first switching subunit 131 and a second switching subunit 132. The second switching subunit 132 is arranged between the first processing module 140 and the first switching subunit 131. When the first boost unit 130 receives the first type of data, the second switching subunit 132 is turned off, and the first switching subunit 131 is turned on such that the preset voltage source 400 is connected to the low potential. When the first boost unit 130 receives the second type of data, the second switching subunit 132 is turned on, and the first switching subunit 131 is turned off such that the preset voltage source 400 outputs the preset voltage to the second buck unit.

In an example, the second buck unit 230 includes a third switching subunit 231. A control end of the third switching subunit 231 is connected to a power end of the second transmission voltage. The third switching subunit 231 is arranged between the preset voltage source 400 and an output end of the second buck unit 230, and the output end of the second buck unit 230 is further connected to the power end of the second transmission voltage. When the second buck unit 230 receives the first type of data, the third switching subunit 231 is turned on. When the second buck unit 230 receives the second type of data, the third switching subunit 231 is turned off.

In an example, the second boost unit 250 includes a fourth switching subunit 251. The fourth switching subunit 251 is arranged between the second processing module 240 and the preset voltage source 400. The fourth switching subunit 251 is configured to receive data sent by the second processing module 240 and be turned on or off according to the type of data. When the second boost unit 250 receives the first type of data, the fourth switching subunit 251 is turned on such that the preset voltage source 400 is connected to a low potential. When the second boost unit 250 receives the second type of data, the fourth switching subunit 251 is turned off such that the preset voltage source 400 outputs the preset voltage to the first buck unit 150.

In an example, the second boost unit 250 includes a fourth switching subunit 251 and a fifth switching subunit 252. The fifth switching subunit 252 is arranged between the fourth switching subunit 251 and the second processing module 240. The fifth switching subunit 252 is configured to receive data sent by the second processing module 240 and be turned on or off according to the type of data. When the second boost unit 250 receives the first type of data, the fifth switching subunit 252 is turned off, and the fourth switching subunit 251 is turned on such that the preset voltage source 400 is connected to the low potential. When the second boost unit 250 receives the second type of data, the fifth switching subunit 252 is turned on, and the fourth switching subunit 251 is turned off such that the preset voltage source 400 outputs the preset voltage to the first buck unit 150.

In an example, the first buck unit 150 includes a sixth switching subunit 151. A control end of the sixth switching subunit 151 is connected to the power end of the first transmission voltage. The sixth switching subunit 151 is arranged between the preset voltage source 400 and the output end of the first buck unit 150, and the output end of first buck unit 150 is further connected to the power end of the first transmission voltage. When the first buck unit 150 receives the first type of data, the sixth switching subunit 151 is turned on such that the output end of the first buck unit 150 is connected to the low potential. When the first buck unit 150 receives the second type of data, the sixth switching subunit 151 is turned off such that the power end of the first transmission voltage outputs the first transmission voltage to the output end of the first buck unit 150.

The above power supply apparatus includes the battery pack 200 and the preset voltage source 400. The battery pack 200 includes the second processing module 240 and the second level shifter module 20. Data transmission is carried out between the second processing module 240 and the second level shifter module 20 at the second transmission voltage. When the external device 200 carries out data transmission with the battery pack 100, the second level shifter module 20 may convert the second transmission voltage to the preset voltage. The preset voltage is greater than the second transmission voltage. Therefore, even if there is an interference signal in the process of transmitting data from the external device 200 to the battery pack 100, due to the high preset voltage, after the voltage of the interference signal is superimposed on the preset voltage, it has little effect on the transmission voltage of the data, and the data can still be normally transmitted into the battery pack 100, which thereby can improve the reliability and stability of data transmission.

Still another example of this application provides an external device 200. As shown in FIG. 6b, the external device 200 includes a second processing module 240, a second level shifter module 20, a second electrode terminal 210 and a second communication terminal 220. The second processing module 240 is electrically connected to the second level shifter module 20. When the external device 200 and the battery pack 100 are matched and connected, the second electrode terminal 210 of the external device 200 and a first electrode terminal 110 of the battery pack 100 are connected correspondingly, the second communication terminal 220 of the external device 200 and a first communication terminal 120 of the battery pack are connected correspondingly, and the second level shifter module 20 is connected to a first level shifter module 10 of the battery pack 100 by using the second communication terminal 220 and the first communication terminal 120. The battery pack 100 further includes a first processing module 140. The first processing module 140 is electrically connected to the first level shifter module 10. Data transmission is carried out between the first processing module 140 and the first level shifter module 10 at a first transmission voltage, and data transmission is carried out between the second processing module 240 and the second level shifter module 20 at a second transmission voltage.

The external device 200 further includes a preset voltage source 400. The preset voltage source 400 is configured to provide a preset voltage. The preset voltage source 400 is connected to the second level shifter module 20. When the second level shifter module 20 sends data to the first level shifter module 10, the second level shifter module 20 switches the second transmission voltage of the data to the preset voltage and sends the data to the first level shifter module 10. When the second level shifter module 20 receives data sent by the first level shifter module 10, the second level shifter module 20 is configured to switch the preset voltage to the second transmission voltage. The preset voltage is greater than the second transmission voltage. In this example, the external device 200 may be a charger or an electric tool.

In an example, the first level shifter module 10 includes a first boost unit 130 and a first buck unit 150, and the second level shifter module 20 includes a second boost unit 250 and a second buck unit 230. The first processing module 140 transmits data to the first boost unit 130 at the first transmission voltage, the first boost unit 130 adjusts a transmission voltage of the data from the first transmission voltage to the preset voltage and sends the data to the second buck unit 230 at the preset voltage, and the second buck unit 230 adjusts the transmission voltage of the data from the preset voltage to the second transmission voltage and transmits the data to the second processing module 240 at the second transmission voltage; and/or the second processing module 240 transmits data to the second boost unit 250 at the second transmission voltage, the second boost unit 250 adjusts the transmission voltage of the data from the second transmission voltage to the preset voltage and sends the data to the first buck unit 150 at the preset voltage, and the first buck unit 150 adjusts the transmission voltage of the data from the preset voltage to the first transmission voltage and transmits the data to the first processing module at the first transmission voltage.

In an example, the first transmission voltage is less than or equal to a withstand voltage of the first processing module 140. The second transmission voltage is less than or equal to a withstand voltage of the second processing module 240.

In an example, the preset voltage source 400 is arranged in the external device and connected between the second level shifter module 20 and the second communication terminal 220.

In an example, a data transmission line is arranged between the second level shifter module 20 and the second communication terminal 220, and the preset voltage source 400 is arranged on the data transmission line.

In an example, the first boost unit 130 includes a first switching subunit 131. The first switching subunit 131 is arranged between the first processing module and the first communication terminal. When the first boost unit 130 receives a first type of data, the first switching subunit 131 is turned on such that the preset voltage source 400 is connected to a low potential. When the first boost unit 130 receives a second type of data, the first switching subunit 131 is turned off such that the preset voltage source 400 outputs the preset voltage to the second buck unit 230.

In an example, the first boost unit 130 includes a first switching subunit 131 and a second switching subunit 132. The second switching subunit 132 is arranged between the first processing module 140 and the first switching subunit 131. When the first boost unit 130 receives the first type of data, the second switching subunit 132 is turned off, and the first switching subunit 131 is turned on such that the preset voltage source 400 is connected to the low potential. When the first boost unit 130 receives the second type of data, the second switching subunit 132 is turned on, and the first switching subunit 131 is turned off such that the preset voltage source 400 outputs the preset voltage to the second buck unit.

In an example, the second buck unit 230 includes a third switching subunit 231. A control end of the third switching subunit 231 is connected to a power end of the second transmission voltage. The third switching subunit 231 is arranged between the preset voltage source 400 and an output end of the second buck unit 230, and the output end of the second buck unit 230 is further connected to the power end of the second transmission voltage. When the second buck unit 230 receives the first type of data, the third switching subunit 231 is turned on. When the second buck unit 230 receives the second type of data, the third switching subunit 231 is turned off.

In an example, the second boost unit 250 includes a fourth switching subunit 251. The fourth switching subunit 251 is arranged between the second processing module 240 and the preset voltage source 400. The fourth switching subunit 251 is configured to receive data sent by the second processing module 240 and be turned on or off according to the type of data. When the second boost unit 250 receives the first type of data, the fourth switching subunit 251 is turned on such that the preset voltage source 400 is connected to a low potential. When the second boost unit 250 receives the second type of data, the fourth switching subunit 251 is turned off such that the preset voltage source 400 outputs the preset voltage to the first buck unit 150.

In an example, the second boost unit 250 includes a fourth switching subunit 251 and a fifth switching subunit 252. The fifth switching subunit 252 is arranged between the fourth switching subunit 251 and the second processing module 240. The fifth switching subunit 252 is configured to receive data sent by the second processing module 240 and be turned on or off according to the type of data. When the second boost unit 250 receives the first type of data, the fifth switching subunit 252 is turned off, and the fourth switching subunit 251 is turned on such that the preset voltage source 400 is connected to the low potential. When the second boost unit 250 receives the second type of data, the fifth switching subunit 252 is turned on, and the fourth switching subunit 251 is turned off such that the preset voltage source 400 outputs the preset voltage to the first buck unit 150.

In an example, the first buck unit 150 includes a sixth switching subunit 151. A control end of the sixth switching subunit 151 is connected to the power end of the first transmission voltage. The sixth switching subunit 151 is arranged between the preset voltage source 400 and the output end of the first buck unit 150, and the output end of first buck unit 150 is further connected to the power end of the first transmission voltage. When the first buck unit 150 receives the first type of data, the sixth switching subunit 151 is turned on such that the output end of the first buck unit 150 is connected to the low potential. When the first buck unit 150 receives the second type of data, the sixth switching subunit 151 is turned off such that the power end of the first transmission voltage outputs the first transmission voltage to the output end of the first buck unit 150.

The external device provided by this example has the same inventive concept as the data transmission system provided by Example I. For the specific structures of modules and units in the external device, reference may be made to the description above, and details will not be repeated here.

The above external device 200 includes the second processing module 240, the second level shifter module 20 and the preset voltage source 400. Data transmission is carried out between the second processing module 240 and the second level shifter module 20 at the second transmission voltage. When the external device 200 carries out data transmission with the battery pack 100, the second level shifter module 20 may convert the second transmission voltage to the preset voltage. The preset voltage is greater than the second transmission voltage. Therefore, even if there is an interference signal in the process of transmitting data from the external device 200 to the battery pack 100, due to the high preset voltage, after the voltage of the interference signal is superimposed on the preset voltage, it has little effect on the transmission voltage of the data, and the data can still be normally transmitted into the battery pack 100, which thereby can improve the reliability and stability of data transmission.

### Example II

This example provides a data transmission method based on the data transmission system provided in Example I. The data transmission system includes a battery pack 100 and an external device 200. The battery pack 100 has a first processing module 140, a first transceiving module 10, a first electrode terminal 110 and a first communication terminal 120. The external device 200 has a second processing module 240, a second transceiving module 20, a second electrode terminal 210 and a second communication terminal 220. The first processing module 140 is electrically connected to the first transceiving module 10, and the second processing module 240 is electrically connected to the second transceiving module 20.

When the battery pack 100 and the external device 200 are matched and connected, the first electrode terminal 110 and the second electrode terminal 210 are connected correspondingly, the first communication terminal 120 and the second communication terminal 220 are connected correspondingly, and the first transceiving module 10 is connected to the second transceiving module 20 by using the first communication terminal 120 and the second communication terminal 220. A boost unit 400 is arranged between the first transceiving module 10 and the second transceiving module 20.

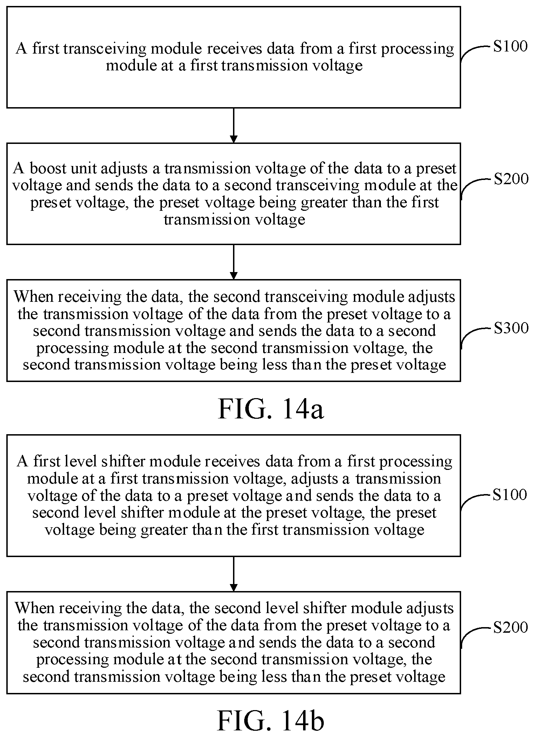

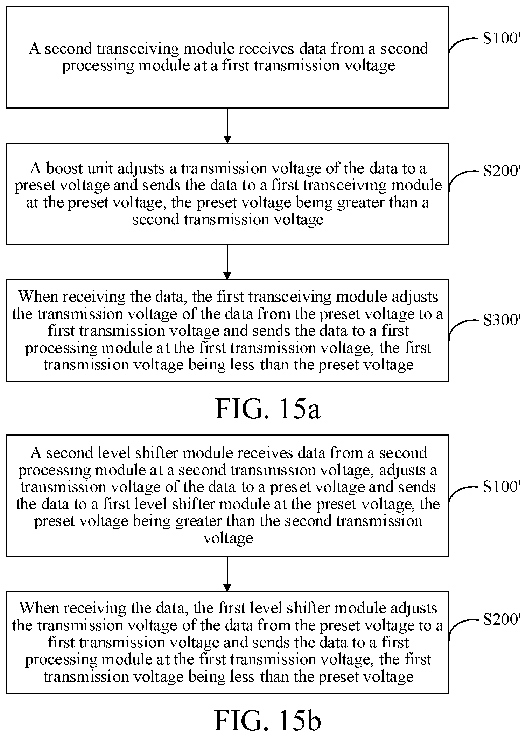

With reference to FIG. 14 and FIG. 15, the data transmission method provided by this example includes:
Step S100: A first transceiving module 10 receives data from a first processing module 140 at a first transmission voltage.
Step S200: A boost unit 400 adjusts a transmission voltage of the data to a preset voltage and sends the data to a second transceiving module 20 at the preset voltage, the preset voltage being greater than the first transmission voltage.
Step S300: When receiving the data, the second transceiving module 20 adjusts the transmission voltage of the data from the preset voltage to a second transmission voltage and sends the data to a second processing module 240 at the second transmission voltage, the second transmission voltage being less than the preset voltage.

Alternatively,
Step S100': A second transceiving module 20 receives data from a second processing module 240 at a first transmission voltage.
Step S200': A boost unit 400 adjusts a transmission voltage of the data to a preset voltage and sends the data to a first transceiving module 10 at the preset voltage, the preset voltage being greater than the second transmission voltage.
Step S300': When receiving the data, the first transceiving module 10 adjusts the transmission voltage of the data from the preset voltage to a first transmission voltage and sends the data to a first processing module 140 at the first transmission voltage, the first transmission voltage being less than the preset voltage.

Due to the boost unit 400 arranged between the first transceiving module 10 and the second transceiving module 20, during the data transmission between the first transceiving module 10 and the second transceiving module 20, the first transmission voltage of the first transceiving module 10 or the second transmission voltage of the second transceiving module 20 can be increased to the larger preset voltage and kept at the larger preset voltage. This can avoid the data transmission failure caused by interference with the transmitted data due to external interference, and can ensure that both the external device 200 and the battery pack 100 can work within the withstand voltage range.

In order to describe the solution of this application more clearly, the data transmission method provided by this example will be described by replacing the first transceiving module 10 with a first level shifter module 10, replacing the second transceiving module 20 with a second level shifter module 20 and replacing the boost unit 400 with a preset voltage source 400.

With reference to FIG. 14b and 15b, the data transmission method provided by this example includes:
Step S100: A first level shifter module 10 receives data from a first processing module 140 at a first transmission voltage, switches a transmission voltage of data to a preset voltage and sends the data to a second level shifter module 20 at the preset voltage, the preset voltage being greater than the first transmission voltage.
Step S200: When receiving the data, the second level shifter module 20 switches the transmission voltage of the data from the preset voltage to a second transmission voltage and sends the data to a second processing module 240 at the second transmission voltage, the second transmission voltage being less than the preset voltage.

Alternatively,
Step S100': A second level shifter module 20 receives data from a second processing module 240 at a first transmission voltage, switches a transmission voltage of the data to a preset voltage and sends the data to a first level shifter module 10 at the preset voltage, the preset voltage being greater than the second transmission voltage.
Step S200': When receiving the data, the first level shifter module 10 switches the transmission voltage of the data from the preset voltage to a first transmission voltage and sends the data to a first processing module 140 at the first transmission voltage, the first transmission voltage being less than the preset voltage.

The data transmission method provided by this example has the same inventive concept as the data transmission system provided by Example I. For the specific structure of the data transmission system and the detailed data transmission method corresponding to the structure, reference may be made to the description in Example I, and details will not be repeated here.

The technical features of the above-mentioned examples can be arbitrarily combined. For the sake of concise description, not all possible combinations of the technical features in the above examples are described. However, as long as there is no contradiction in the combination of these technical features, it should be considered as falling within the scope recorded in this specification.

In the above-mentioned examples, only several implementations of the present disclosure are expressed, which are specifically described in detail, but this should not be understood as limiting the scope of the invention patent. It should be noted that for those of ordinary skill in the art, several modifications and improvements can be made without departing from the concept of the present disclosure. These are modifications and improvements are all within the scope of protection of the present disclosure. Therefore, the scope of protection of the invention patent shall be subject to the appended claims.

## Claims

1. A data transmission system, comprising a battery pack(100) and an external device(200), wherein the battery pack(100) has a first processing module(140), a first level shifter module(10), a first electrode terminal(110) and a first communication terminal(120), and the external device(200) has a second processing module(240), a second level shifter module(20), a second electrode terminal(210) and a second communication terminal(220); the first processing module(140) is electrically connected to the first level shifter module(10); the second processing module(240) is electrically connected to the second level shifter module(20); when the battery pack(100) and the external device(200) are matched and connected, the first electrode terminal(110) and the second electrode terminal(210) are connected correspondingly, the first communication terminal(120) and the second communication terminal(220) are connected correspondingly, and the first level shifter module(10) is connected to the second level shifter module(20) by using the first communication terminal(120), and the second communication terminal(220),, so as to carry out data transmission between the first processing module(140), and the second processing module(240);
the first level shifter module(10) is configured to receive data from the first processing module(140) or sends data to the first processing module(140) at a first transmission voltage, and the second level shifter module(20) is configured to receive data from the second processing module(240) or sends data to the second processing module(240) at a second transmission voltage; and
a preset voltage source(400) is arranged between the first level shifter module(10) and the second level shifter module(20), and the preset voltage source(400) is configured to provide a preset voltage; when the first level shifter module(10) is configured to send data to the second level shifter module(20), the first level shifter module(10) is configured to switch the first transmission voltage to the preset voltage, and the second level shifter module(20) is configured to switch the preset voltage to the second transmission voltage, or when the second level shifter module(20) is configured to send data to the first level shifter module(10), the second
level shifter module(20) is configured to switch the second transmission voltage to the preset voltage, and the first level shifter module(10) is configured to switch the preset voltage to the first transmission voltage; and the preset voltage is greater than the first transmission voltage and the second transmission voltage, **characterised in that**
the first level shifter module(10) comprises a first boost unit(130) and a first buck unit (150), and the second level shifter module(20) comprises a second boost unit (250) and a second buck unit(230);
the first processing module(140) is configured to transmit data to the first boost unit(130) at the first transmission voltage, the first boost unit(130) is configured to adjust a transmission voltage of the data from the first transmission voltage to the preset voltage and sends the data to the second buck unit(230) at the preset voltage, and the second buck unit(230) adjusts the transmission voltage of the data from the preset voltage to the second transmission voltage and transmits the data to the second processing module (240) at the second transmission voltage;
the second processing(240) module is configured to transmit data to the second boost unit(250) at the second transmission voltage, the second boost unit(250) adjusts a transmission voltage of the data from the second transmission voltage to the preset voltage and sends the data to the first buck unit(150) at the preset voltage, and the first buck unit(150) adjusts the transmission voltage of the data from the preset voltage to the first transmission voltage and transmits the data to the first processing module(140) at the first transmission voltage;
the first boost unit(130) comprises a first switching subunit(131), the first switching subunit(131) being arranged between the first processing module(140) and the preset voltage source(400), and configured to receive the data sent by the first processing module(140) and be turned on or off according to a type of data; and
when the first boost unit(130) is configured to receive a first type of data, the first switching subunit(131) is turned on such that the preset voltage source(400) is connected to a low potential; and when the first boost unit(130) receives a second type of data, the first switching subunit(131) is turned off such that the preset voltage source(400) outputs the preset voltage to the second buck unit(230).

2. The data transmission system according to claim 1, wherein the first transmission voltage is less than or equal to a withstand voltage of the first processing module(140); and the second transmission voltage is less than or equal to a withstand voltage of the second processing module(240).

3. The data transmission system according to claim 1, wherein the preset voltage source(400) is arranged in the battery pack(100) and connected between the first level shifter module(10) and the first communication terminal(120); or the preset voltage source(400) is arranged in the external device(200) and connected between the second level shifter module(20) and the second communication terminal(20).

4. The data transmission system according to claim 1, wherein a data transmission line(300) is arranged between the first level shifter module(10) and the first communication terminal(120), or a data transmission line(300) is arranged between the second level shifter module(20) and the second communication terminal(220), or a data transmission line(300) is arranged between the first communication terminal(120) and the second communication terminal(220); and
the preset voltage source(400) is arranged on the data transmission line(300).

5. The data transmission system according to any one of claims 1 to 4, wherein the external device(200) comprises a charger or the external device comprises an electric tool.

6. The data transmission system according to claim 1, wherein the first boost unit(130) further comprises a second switching subunit(132), the second switching subunit(132) being arranged between the first processing module(140) and the first switching subunit(131), and the second switching subunit(132) being configured to receive the data sent by the first processing module(140) and be turned on or off according to the type of data; and
when the first boost unit(130) receives the first type of data, the second switching subunit(132) is turned off, and the first switching subunit(131) is turned on such that the preset voltage source(400) is connected to the low potential; and when the first boost unit(130) receives the second type of data, the second switching subunit(132) is turned on, and the first switching subunit(131) is turned off such that the preset voltage source(400) outputs the preset voltage to the second buck unit(230).

7. The data transmission system according to claim 1 or 6, wherein the second buck unit(230) comprises a third switching subunit(231), the third switching subunit(231) being arranged between the preset voltage source(400) and an output end of the second buck unit(230), and the output end of the second buck unit(230) being further connected to a power end of the second transmission voltage; and
when the second buck unit(230) receives the first type of data, the third switching subunit(231) is turned on such that the output end of the second buck unit(230) is connected to the low potential; and when the second buck unit(230) receives the second type of data, the third switching subunit(231) is turned off such that the power end of the second transmission voltage outputs the second transmission voltage to the output end of the second buck unit(230).

8. The data transmission system according to claim 1, wherein the second boost unit(250) comprises a fourth switching subunit(251), the fourth switching subunit(251) being arranged between the second processing module(240) and the preset voltage source(400), and the fourth switching subunit(251) being configured to receive the data sent by the second processing module(240) and be turned on or off according to a type of data; and
when the second boost unit(250) receives a first type of data, the fourth switching subunit(251) is turned on such that the preset voltage source(400) is connected to a low potential; and when the second boost unit(250) receives a second type of data, the fourth switching subunit(251) is turned off such that the preset voltage source(400) outputs the preset voltage to the first buck unit(150).

9. The data transmission system according to claim 8, wherein the second boost unit(250) further comprises a fifth switching subunit(252), the fifth switching subunit(252) being arranged between the second processing module(240) and the fourth switching subunit(251), and the fifth switching subunit(252) being configured to receive the data sent by the second processing module(240) and be turned on or off according to the type of data; and
when the second boost unit(250) receives the first type of data, the fifth switching subunit(252) is turned off, and the fourth switching subunit(251) is turned on such that the preset voltage source(400) is connected to the low potential; and when the second boost unit(250) receives the second type of data, the fifth switching subunit(252) is turned on, and the fourth switching subunit(251) is turned off such that the preset voltage source(400) outputs the preset voltage to the first buck unit(150).

10. The data transmission system according to claim 8 or 9, wherein the first buck unit(150) comprises a sixth switching subunit(151), the sixth switching subunit(151) being arranged between the preset voltage source(400) and an output end of the first buck unit(150), and the output end of the first buck unit(1501) being connected to a power end of the first transmission voltage; and
when the first buck unit(150) receives the first type of data, the sixth switching subunit(151) is turned on such that the output end of the first buck unit(150) is connected to the low potential; and when the first buck unit(150) receives the second type of data, the sixth switching subunit(151) is turned off such that the power end of the first transmission voltage outputs the first transmission voltage to the output end of the first buck unit(150).

11. The data transmission system according to claim 1, wherein a preset voltage source(400) is connected to the first level shifter module(10) and the second level shifter module(20) by using a first pull-up resistor.

## Patentansprüche

1. Datenübertragungssystem, das einen Batteriepack (100) und eine externe Vorrichtung (200) umfasst, wobei der Batteriepack (100) ein erstes Verarbeitungsmodul (140), ein erstes Pegelumsetzermodul (10), einen ersten Elektrodenanschluss (110) und einen ersten Kommunikationsanschluss (120) aufweist und die externe Vorrichtung (200) ein zweites Verarbeitungsmodul (240), ein zweites Pegelumsetzermodul (20), einen zweiten Elektrodenanschluss (210) und einen zweiten Kommunikationsanschluss (220) aufweist; wobei das erste Verarbeitungsmodul (140) elektrisch mit dem ersten Pegelumsetzermodul (10) verbunden ist; das zweite Verarbeitungsmodul (240) elektrisch mit dem zweiten Pegelumsetzermodul (20) verbunden ist; wenn der Batteriepack (100) und die externe Vorrichtung (200) angepasst und verbunden sind, der erste Elektrodenanschluss (110) und der zweite Elektrodenanschluss (210) entsprechend verbunden sind, der erste Kommunikationsanschluss (120) und der zweite Kommunikationsanschluss (220) entsprechend verbunden sind und das erste Pegelumsetzermodul (10) unter Verwendung des das ersten Kommunikationsanschlusses (120) und des zweiten Kommunikationsanschlusses (220) mit dem zweiten Pegelumsetzermodul (20) verbunden ist, um eine Datenübertragung zwischen dem ersten Verarbeitungsmodul (140) und dem zweiten Verarbeitungsmodul (240) auszuführen;
das erste Pegelumsetzermodul (10) dazu ausgelegt ist, Daten von dem ersten Verarbeitungsmodul (140) zu empfangen, oder Daten mit einer ersten Übertragungsspannung an das erste Verarbeitungsmodul (140) sendet, und das zweite Pegelumsetzermodul (20) dazu ausgelegt ist, Daten von dem zweiten Verarbeitungsmodul (240) zu empfangen, oder Daten mit einer zweiten Übertragungsspannung an das zweite Verarbeitungsmodul (240) sendet; und
eine voreingestellte Spannungsquelle (400) zwischen dem ersten Pegelumsetzermodul (10) und dem zweiten Pegelumsetzermodul (20) angeordnet ist und die voreingestellte Spannungsquelle (400) dazu ausgelegt ist, eine voreingestellte Spannung bereitzustellen; wenn das erste Pegelumsetzermodul (10) dazu ausgelegt ist, Daten an das zweite Pegelumsetzermodul (20) zu senden, das erste Pegelumsetzermodul (10) dazu ausgelegt ist, die erste Übertragungsspannung auf die voreingestellte Spannung umzuschalten, und das zweite Pegelumsetzermodul (20) dazu ausgelegt ist, die voreingestellte Spannung auf die zweite Übertragungsspannung umzuschalten, oder wenn das zweite Pegelumsetzermodul (20) dazu ausgelegt ist, Daten an das erste Pegelumsetzermodul (10) zu senden, das zweite Pegelumsetzermodul (20) dazu ausgelegt ist, die zweite Übertragungsspannung auf die voreingestellte Spannung umzuschalten, und das erste Pegelumsetzermodul (10) dazu ausgelegt ist, die voreingestellte Spannung auf die erste Übertragungsspannung umzuschalten; und die voreingestellte Spannung größer als die erste Übertragungsspannung und die zweite Übertragungsspannung ist, **dadurch gekennzeichnet, dass**
das erste Pegelumsetzermodul (10) eine erste Aufwärtswandlungseinheit (130) und eine erste Abwärtswandlungseinheit (150) umfasst und das zweite Pegelumsetzermodul (20) eine zweite Aufwärtswandlungseinheit (250) und eine zweite Abwärtswandlungseinheit (230) umfasst;
das erste Verarbeitungsmodul (140) dazu ausgelegt ist, Daten mit der ersten Übertragungsspannung an die erste Aufwärtswandlungseinheit (130) zu übertragen, die erste Aufwärtswandlungseinheit (130) dazu ausgelegt ist, eine Übertragungsspannung der Daten von der ersten Übertragungsspannung auf die voreingestellte Spannung anzupassen, und die Daten mit der voreingestellten Spannung an die zweite Abwärtswandlungseinheit (230) sendet, und die zweite Abwärtswandlungseinheit (230) die Übertragungsspannung der Daten von der voreingestellten Spannung auf die zweite Übertragungsspannung anpasst und die Daten mit der zweiten Übertragungsspannung an das zweite Verarbeitungsmodul (240) überträgt;
das zweite Verarbeitungsmodul (240) dazu ausgelegt ist, Daten mit der zweiten Übertragungsspannung an die zweite Aufwärtswandlungseinheit (250) zu übertragen, die zweite Aufwärtswandlungseinheit (250) eine Übertragungsspannung der Daten von der zweiten Übertragungsspannung auf die voreingestellte Spannung anpasst und die Daten mit der voreingestellten Spannung an die erste Abwärtswandlungseinheit (150) sendet, und die zweite Abwärtswandlungseinheit (150) die Übertragungsspannung der Daten von der voreingestellten Spannung auf die erste Übertragungsspannung anpasst und die Daten mit der ersten Übertragungsspannung an das erste Verarbeitungsmodul (140) überträgt;
die erste Aufwärtswandlungseinheit (130) umfasst eine erste Schaltuntereinheit (131), wobei die erste Schaltuntereinheit (131) zwischen dem ersten Verarbeitungsmodul (140) und der voreingestellten Spannungsquelle (400) angeordnet ist und dazu ausgelegt ist, die durch das erste Verarbeitungsmodul (140) gesendeten Daten zu empfangen und gemäß einem Datentyp ein- oder ausgeschaltet zu werden; und
wenn die erste Aufwärtswandlungseinheit (130) dazu ausgelegt ist, einen ersten Datentyp zu empfangen, die erste Schaltuntereinheit (131) eingeschaltet wird, sodass die voreingestellte Spannungsquelle (400) mit einem niedrigen Potenzial verbunden ist; und wenn die erste Aufwärtswandlungseinheit (130) einen zweiten Datentyp empfängt, die erste Schaltuntereinheit (131) ausgeschaltet wird, sodass die voreingestellte Spannungsquelle (400) die voreingestellte Spannung an die zweite Abwärtswandlungseinheit (230) ausgibt.

2. Datenübertragungssystem nach Anspruch 1, wobei die erste Übertragungsspannung kleiner oder gleich einer Stehspannung des ersten Verarbeitungsmoduls (140) ist und die zweite Übertragungsspannung kleiner oder gleich einer Stehspannung des zweiten Verarbeitungsmoduls (240) ist.

3. Datenübertragungssystem nach Anspruch 1, wobei die voreingestellte Spannungsquelle (400) in dem Batteriepack (100) angeordnet und zwischen das erste Pegelumsetzermodul (10) und den ersten Kommunikationsanschluss (120) geschaltet ist; oder die voreingestellte Spannungsquelle (400) in der externen Vorrichtung (200) angeordnet und zwischen das zweite Pegelumsetzermodul (20) und den zweiten Kommunikationsanschluss (20) geschaltet ist.

4. Datenübertragungssystem nach Anspruch 1, wobei eine Datenübertragungsleitung (300) zwischen dem ersten Pegelumsetzermodul (10) und dem ersten Kommunikationsanschluss (120) angeordnet ist oder eine Datenübertragungsleitung (300) zwischen dem zweiten Pegelumsetzermodul (20) und dem zweiten Kommunikationsanschluss (220) angeordnet ist oder eine Datenübertragungsleitung (300) zwischen dem ersten Kommunikationsanschluss (120) und dem zweiten Kommunikationsanschluss (220) angeordnet ist; und
die voreingestellte Spannungsquelle (400) auf der Datenübertragungsleitung (300) angeordnet ist.

5. Datenübertragungssystem nach einem der Ansprüche 1 bis 4, wobei die externe Vorrichtung (200) ein Ladegerät umfasst oder die externe Vorrichtung ein Elektrowerkzeug umfasst.

6. Datenübertragungssystem nach Anspruch 1, wobei die erste Aufwärtswandlungseinheit (130) ferner eine zweite Schaltuntereinheit (132) umfasst, wobei die zweite Schaltuntereinheit (132) zwischen dem ersten Verarbeitungsmodul (140) und der ersten Schaltuntereinheit (131) angeordnet ist und die zweite Schaltuntereinheit (132) dazu ausgelegt ist, die durch das erste Verarbeitungsmodul (140) gesendeten Daten zu empfangen und gemäß dem Datentyp ein- oder ausgeschaltet zu werden; und
wenn die erste Aufwärtswandlungseinheit (130) den ersten Datentyp empfängt, die zweite Schaltuntereinheit (132) ausgeschaltet wird und die erste Schaltuntereinheit (131) eingeschaltet wird, sodass die voreingestellte Spannungsquelle (400) mit dem niedrigen Potenzial verbunden ist; und wenn die erste Aufwärtswandlungseinheit (130) den zweiten Datentyp empfängt, die zweite Schaltuntereinheit (132) eingeschaltet wird und die erste Schaltuntereinheit (131) ausgeschaltet wird, sodass die voreingestellte Spannungsquelle (400) die voreingestellte Spannung an die zweite Abwärtswandlungseinheit (230) ausgibt.

7. Datenübertragungssystem nach Anspruch 1 oder 6, wobei die zweite Abwärtswandlungseinheit (230) eine dritte Schaltuntereinheit (231) umfasst, wobei die dritte Schaltuntereinheit (231) zwischen der voreingestellten Spannungsquelle (400) und einem Ausgangsende der zweiten Abwärtswandlungseinheit (230) angeordnet ist und das Ausgangsende der zweiten Abwärtswandlungseinheit (230) ferner mit einem Leistungsende der zweiten Übertragungsspannung verbunden ist; und
wenn die zweite Abwärtswandlungseinheit (230) den ersten Datentyp empfängt, die dritte Schaltuntereinheit (231) eingeschaltet wird, sodass das Ausgangsende der zweiten Abwärtswandlungseinheit (230) mit dem niedrigen Potenzial verbunden ist; und wenn die zweite Abwärtswandlungseinheit (230) den zweiten Datentyp empfängt, die dritte Schaltuntereinheit (231) ausgeschaltet wird, sodass das Leistungsende der zweiten Übertragungsspannung die zweite Übertragungsspannung an das Ausgangsende der zweiten Abwärtswandlungseinheit (230) ausgibt.

8. Datenübertragungssystem nach Anspruch 1, wobei die zweite Aufwärtswandlungseinheit (250) eine vierte Schaltuntereinheit (251) umfasst, wobei die vierte Schaltuntereinheit (251) zwischen dem zweiten Verarbeitungsmodul (240) und der voreingestellten Spannungsquelle (400) angeordnet ist und die vierte Schaltuntereinheit (251) dazu ausgelegt ist, die durch das zweite Verarbeitungsmodul (240) gesendeten Daten zu empfangen und gemäß einem Datentyp ein- oder ausgeschaltet zu werden; und
wenn die zweite Aufwärtswandlungseinheit (250) einen ersten Datentyp empfängt, die vierte Schaltuntereinheit (251) eingeschaltet wird, sodass die voreingestellte Spannungsquelle (400) mit einem niedrigen Potenzial verbunden ist; und wenn die zweite Aufwärtswandlungseinheit (250) einen zweiten Datentyp empfängt, die erste Schaltuntereinheit (251) ausgeschaltet wird, sodass die voreingestellte Spannungsquelle (400) die voreingestellte Spannung an die erste Abwärtswandlungseinheit (150) ausgibt.

9. Datenübertragungssystem nach Anspruch 8, wobei die zweite Aufwärtswandlungseinheit (250) ferner eine fünfte Schaltuntereinheit (252) umfasst, wobei die fünfte Schaltuntereinheit (252) zwischen dem zweiten Verarbeitungsmodul (240) und der vierten Schaltuntereinheit (251) angeordnet ist und die fünfte Schaltuntereinheit (252) dazu ausgelegt ist, die durch das zweite Verarbeitungsmodul (240) gesendeten Daten zu empfangen und gemäß dem Datentyp ein- oder ausgeschaltet zu werden; und
wenn die zweite Aufwärtswandlungseinheit (250) den ersten Datentyp empfängt, die fünfte Schaltuntereinheit (252) ausgeschaltet wird und die vierte Schaltuntereinheit (251) eingeschaltet wird, sodass die voreingestellte Spannungsquelle (400) mit dem niedrigen Potenzial verbunden ist; und wenn die zweite Aufwärtswandlungseinheit (250) den zweiten Datentyp empfängt, die fünfte Schaltuntereinheit (252) eingeschaltet wird und die vierte Schaltuntereinheit (251) ausgeschaltet wird, sodass die voreingestellte Spannungsquelle (400) die voreingestellte Spannung an die erste Abwärtswandlungseinheit (150) ausgibt.

10. Datenübertragungssystem nach Anspruch 8 oder 9, wobei die erste Abwärtswandlungseinheit (150) eine sechste Schaltuntereinheit (151) umfasst, wobei die sechste Schaltuntereinheit (151) zwischen der voreingestellten Spannungsquelle (400) und einem Ausgangsende der ersten Abwärtswandlungseinheit (150) angeordnet ist und das Ausgangsende der ersten Abwärtswandlungseinheit (1501) mit einem Leistungsende der ersten Übertragungsspannung verbunden ist; und
wenn die erste Abwärtswandlungseinheit (150) den ersten Datentyp empfängt, die sechste Schaltuntereinheit (151) eingeschaltet wird, sodass das Ausgangsende der ersten Abwärtswandlungseinheit (150) mit dem niedrigen Potenzial verbunden ist; und wenn die erste Abwärtswandlungseinheit (150) den zweiten Datentyp empfängt, die sechste Schaltuntereinheit (151) ausgeschaltet wird, sodass das Leistungsende der ersten Übertragungsspannung die erste Übertragungsspannung an das Ausgangsende der ersten Abwärtswandlungseinheit (150) ausgibt.

11. Datenübertragungssystem nach Anspruch 1, wobei eine voreingestellte Spannungsquelle (400) unter Verwendung eines ersten Pull-Up-Widerstands mit dem ersten Pegelumsetzermodul (10) und dem zweiten Pegelumsetzermodul (20) verbunden ist.

## Revendications

1. Système de transmission de données, comprenant un bloc-batterie (100) et un dispositif externe (200), le bloc-batterie (100) présentant un premier module de traitement (140), un premier module de décalage de niveau (10), une première borne d'électrode (110) et une première borne de communication (120), et le dispositif externe (200) présentant un deuxième module de traitement (240), un deuxième module de décalage de niveau (20), une deuxième borne d'électrode (210) et une deuxième borne de communication (220) ; le premier module de traitement (140) étant électriquement connecté au premier module de décalage de niveau (10) ; le deuxième module de traitement (240) étant électriquement connecté au deuxième module de décalage de niveau (20) ; lorsque le bloc-batterie (100) et le dispositif externe (200) sont appariés et connectés, la première borne d'électrode (110) et la deuxième borne d'électrode (210) étant connectées de manière correspondante, la première borne de communication (120) et la deuxième borne de communication (220) étant connectées de manière correspondante, et le premier module de décalage de niveau (10) étant connecté au deuxième module de décalage de niveau (20) via la première borne de communication (120) et la deuxième borne de communication (220), de manière à réaliser une transmission de données entre le premier module de traitement (140) et le deuxième module de traitement (240) ;
le premier module de décalage de niveau (10) étant configuré pour recevoir des données depuis le premier module de traitement (140) ou envoyer des données au premier module de traitement (140) à une première tension de transmission, et le deuxième module de décalage de niveau (20) étant configuré pour recevoir des données depuis le deuxième module de traitement (240) ou envoyer des données au deuxième module de traitement (240) à une deuxième tension de transmission ; et
une source de tension prédéfinie (400) étant agencée entre le premier module de décalage de niveau (10) et le deuxième module de décalage de niveau (20), et la source de tension prédéfinie (400) étant configurée pour fournir une tension prédéfinie ; lorsque le premier module de décalage de niveau (10) est configuré pour envoyer des données au deuxième module de décalage de niveau (20), le premier module de décalage de niveau (10) étant configuré pour commuter de la première tension de transmission sur la tension prédéfinie, et le deuxième module de décalage de niveau (20) étant configuré pour commuter de la tension prédéfinie sur la deuxième tension de transmission ou, lorsque le deuxième module de décalage de niveau (20) est configuré pour envoyer des données au premier module de décalage de niveau (10), le deuxième module de décalage de niveau (20) étant configuré pour commuter de la deuxième tension de transmission sur la tension prédéfinie, et le premier module de décalage de niveau (10) étant configuré pour commuter de la tension prédéfinie sur la première tension de transmission ; et la tension prédéfinie étant supérieure à la première tension de transmission et à la deuxième tension de transmission, **caractérisé en ce que** le premier module de décalage de niveau (10) comprend une première unité d'élévation de tension (130) et une première unité d'abaissement de tension (150), et le deuxième module de décalage de niveau (20) comprend une deuxième unité d'élévation de tension (250) et une deuxième unité d'abaissement de tension (230) ;
le premier module de traitement (140) est configuré pour transmettre des données à la première unité d'élévation de tension (130) à la première tension de transmission, la première unité d'élévation de tension (130) est configurée pour ajuster une tension de transmission des données de la première tension de transmission sur la tension prédéfinie et envoie les données à la deuxième unité d'abaissement de tension (230) à la tension prédéfinie, et la deuxième unité d'abaissement de tension (230) ajuste la tension de transmission des données de la tension prédéfinie sur la deuxième tension de transmission et transmet les données au deuxième module de traitement (240) à la deuxième tension de transmission ;
le deuxième module de traitement (240) est configuré pour transmettre des données à la deuxième unité d'élévation de tension (250) à la deuxième tension de transmission, la deuxième unité d'élévation de tension (250) ajuste une tension de transmission des données de la deuxième tension de transmission sur la tension prédéfinie et envoie les données à la première unité d'abaissement de tension (150) à la tension prédéfinie, et la première unité d'abaissement de tension (150) ajuste la tension de transmission des données de la tension prédéfinie sur la première tension de transmission et transmet les données au premier module de traitement (140) à la première tension de transmission ;
la première unité d'élévation de tension (130) comprend une première sous-unité de commutation (131), la première sous-unité de commutation (131) étant agencée entre le premier module de traitement (140) et la source de tension prédéfinie (400), et configurée pour recevoir les données envoyées par le premier module de traitement (140) et être activée ou désactivée selon un type de données ; et
lorsque la première unité d'élévation de tension (130) est configurée pour recevoir un premier type de données, la première sous-unité de commutation (131) est activée de sorte que la source de tension prédéfinie (400) est connectée à un potentiel bas ; et, lorsque la première unité d'élévation de tension (130) reçoit un deuxième type de données, la première sous-unité de commutation (131) est désactivée de sorte que la source de tension prédéfinie (400) délivre la tension prédéfinie à la deuxième unité d'abaissement de tension (230).

2. Système de transmission de données selon la revendication 1, dans lequel la première tension de transmission est inférieure ou égale à une tension de tenue du premier module de traitement (140) ; et la deuxième tension de transmission est inférieure ou égale à une tension de tenue du deuxième module de traitement (240).

3. Système de transmission de données selon la revendication 1, dans lequel la source de tension prédéfinie (400) est agencée dans le bloc-batterie (100) et connectée entre le premier module de décalage de niveau (10) et la première borne de communication (120) ; ou la source de tension prédéfinie (400) est agencée dans le dispositif externe (200) et connectée entre le deuxième module de décalage de niveau (20) et la deuxième borne de communication (20).

4. Système de transmission de données selon la revendication 1, dans lequel une ligne de transmission de données (300) est agencée entre le premier module de décalage de niveau (10) et la première borne de communication (120), ou une ligne de transmission de données (300) est agencée entre le deuxième module de décalage de niveau (20) et la deuxième borne de communication (220), ou une ligne de transmission de données (300) est agencée entre la première borne de communication (120) et la deuxième borne de communication (220) ; et
la source de tension prédéfinie (400) est agencée sur la ligne de transmission de données (300).

5. Système de transmission de données selon l'une quelconque des revendications 1 à 4, dans lequel le dispositif externe (200) comprend un chargeur ou le dispositif externe comprend un outil électrique.

6. Système de transmission de données selon la revendication 1, dans lequel la première unité d'élévation de tension (130) comprend en outre une deuxième sous-unité de commutation (132), la deuxième sous-unité de commutation (132) étant agencée entre le premier module de traitement (140) et la première sous-unité de commutation (131), et la deuxième sous-unité de commutation (132) étant configurée pour recevoir les données envoyées par le premier module de traitement (140) et être activée ou désactivée selon le type de données ; et
lorsque la première unité d'élévation de tension (130) reçoit le premier type de données, la deuxième sous-unité de commutation (132) est désactivée, et la première sous-unité de commutation (131) est activée de sorte que la source de tension prédéfinie (400) est connectée au potentiel bas ; et, lorsque la première unité d'élévation de tension (130) reçoit le deuxième type de données, la deuxième sous-unité de commutation (132) est activée, et la première sous-unité de commutation (131) est désactivée de sorte que la source de tension prédéfinie (400) délivre la tension prédéfinie à la deuxième unité d'abaissement de tension (230).

7. Système de transmission de données selon la revendication 1 ou 6, dans lequel la deuxième unité d'abaissement de tension (230) comprend une troisième sous-unité de commutation (231), la troisième sous-unité de commutation (231) étant agencée entre la source de tension prédéfinie (400) et une extrémité de sortie de la deuxième unité d'abaissement de tension (230), et l'extrémité de sortie de la deuxième unité d'abaissement de tension (230) étant en outre connectée à une extrémité d'alimentation de la deuxième tension de transmission ; et
lorsque la deuxième unité d'abaissement de tension (230) reçoit le premier type de données, la troisième sous-unité de commutation (231) est activée de sorte que l'extrémité de sortie de la deuxième unité d'abaissement de tension (230) est connectée au potentiel bas ; et, lorsque la deuxième unité d'abaissement de tension (230) reçoit le deuxième type de données, la troisième sous-unité de commutation (231) est désactivée de sorte que l'extrémité d'alimentation de la deuxième tension de transmission délivre la deuxième tension de transmission à l'extrémité de sortie de la deuxième unité d'abaissement de tension (230).

8. Système de transmission de données selon la revendication 1, dans lequel la deuxième unité d'élévation de tension (250) comprend une quatrième sous-unité de commutation (251), la quatrième sous-unité de commutation (251) étant agencée entre le deuxième module de traitement (240) et la source de tension prédéfinie (400), et la quatrième sous-unité de commutation (251) étant configurée pour recevoir les données envoyées par le deuxième module de traitement (240) et être activée ou désactivée selon un type de données ; et
lorsque la deuxième unité d'élévation de tension (250) reçoit un premier type de données, la quatrième sous-unité de commutation (251) est activée de sorte que la source de tension prédéfinie (400) est connectée à un potentiel bas ; et, lorsque la deuxième unité d'élévation de tension (250) reçoit un deuxième type de données, la quatrième sous-unité de commutation (251) est désactivée de sorte que la source de tension prédéfinie (400) délivre la tension prédéfinie à la première unité d'abaissement de tension (150).

9. Système de transmission de données selon la revendication 8, dans lequel la deuxième unité d'élévation de tension (250) comprend en outre une cinquième sous-unité de commutation (252), la cinquième sous-unité de commutation (252) étant agencée entre le deuxième module de traitement (240) et la quatrième sous-unité de commutation (251), et la cinquième sous-unité de commutation (252) étant configurée pour recevoir les données envoyées par le deuxième module de traitement (240) et être activée ou désactivée selon le type de données ; et
lorsque la deuxième unité d'élévation de tension (250) reçoit le premier type de données, la cinquième sous-unité de commutation (252) est désactivée, et la quatrième sous-unité de commutation (251) est activée de sorte que la source de tension prédéfinie (400) est connectée au potentiel bas ; et, lorsque la deuxième unité d'élévation de tension (250) reçoit le deuxième type de données, la cinquième sous-unité de commutation (252) est activée, et la quatrième sous-unité de commutation (251) est désactivée de sorte que la source de tension prédéfinie (400) délivre la tension prédéfinie à la première unité d'abaissement de tension (150).

10. Système de transmission de données selon la revendication 8 ou 9, dans lequel la première unité d'abaissement de tension (150) comprend une sixième sous-unité de commutation (151), la sixième sous-unité de commutation (151) étant agencée entre la source de tension prédéfinie (400) et une extrémité de sortie de la première unité d'abaissement de tension (150), et l'extrémité de sortie de la première unité d'abaissement de tension (1501) étant connectée à une extrémité d'alimentation de la première tension de transmission ; et
lorsque la première unité d'abaissement de tension (150) reçoit le premier type de données, la sixième sous-unité de commutation (151) est activée de sorte que l'extrémité de sortie de la première unité d'abaissement de tension (150) est connectée au potentiel bas ; et, lorsque la première unité d'abaissement de tension (150) reçoit le deuxième type de données, la sixième sous-unité de commutation (151) est désactivée de sorte que l'extrémité d'alimentation de la première tension de transmission délivre la première tension de transmission à l'extrémité de sortie de la première unité d'abaissement de tension (150).

11. Système de transmission de données selon la revendication 1, dans lequel une source de tension prédéfinie (400) est connectée au premier module de décalage de niveau (10) et au deuxième module de décalage de niveau (20) via une première résistance de tirage à l'état haut.
